# EUROPÄISCHE PATENTSCHRIFT

(11) **EP 2 019 003 B1**
(45) Veröffentlichungstag und Bekanntmachung des Hinweises auf die Patenterteilung: **10.11.2010**
(21) Anmeldenummer: 08075781.8
(22) Anmeldetag: 05.03.2007
(51) Int. Cl.: B60R 21/264

(54) **Airbagmodul für ein Kraftfahrzeug**
Airbag module for a motor vehicle
Module d'airbag pour véhicule automobile

(30) Priorität: 03.03.2006 DE 102006010953
(43) Veröffentlichungstag der Anmeldung: 28.01.2009
(62) Teilanmeldung aus: 07723043.1
(73) Patentinhaber: Takata-Petri AG, 63743 Aschaffenburg (DE)
(72) Erfinder: Meissner, Dirk, 13467 Berlin (DE); Markfort, Dieter, 13088 Berlin (DE); Vidolov, Kliment, 14055 Berlin (DE); Fernandez, Juan, 10407 Berlin (DE); Hänsel, Michael, 16562 Bergfelde (DE); Lube, Thomas, 12589 Berlin (DE)
(74) Vertreter: Baumgärtel, Gunnar

(56) Entgegenhaltungen:
- EP-A2- 0 978 424
- EP-A2- 0 995 643
- DE-A1- 19 602 695
- DE-A1- 19 612 581
- DE-U1-202005 016 457
- US-A- 3 810 655
- US-A- 5 669 631

## Beschreibung

Die Erfindung betrifft ein Airbagmodul für ein Kraftfahrzeug gemäß dem Oberbegriff des Anspruchs 1.

Ein derartiges Airbagmodul weist einen Gassack auf, der zum Schutz eines Insassen an einem Kraftfahrzeug mit Gas aufblasbar ist. Das zum Aufblasen des Gassackes benötigte Gas wird dabei mittels eines Gasgenerators erzeugt. Weiterhin weist das Airbagmodul eine zusätzliche Kühlvorrichtung auf, die ein öffenbares Reservoir zum Speichern eines Kühlmittels umfasst, wobei das Reservoir dazu ausgebildet ist, insbesondere beim Aufblasen des Gassackes geöffnet zu werden, so dass das Kühlmittel zum Kühlen des zum Aufblasen des Gassackes verwendeten Gases in Kontakt mit diesem gelangen kann.

Das Airbagmodul kann zum Verteilen der durch den Gasgenerator zum Aufblasen des Gassackes verwendeten Gase einen Diffusor aufweisen, der durch eine Einströmöffnung des Gassackes in den Innenraum des Gassackes hineinragt und bevorzugt zum Festklemmen eines die Einströmöffnung berandenden Randbereiches des Gassackes an einem Teil des Airbagmoduls dient. Bei jenem Teil kann es sich insbesondere um einen Flansch des Gasgenerators oder einen Generatorträger handeln.

Der Diffusor weist zum Festlegen des Diffusors am Airbagmodul und zum Festklemmen des Gassackes am Airbagmodul einen Flansch auf, der den Diffusor in einer Umfangsrichtung ringförmig umläuft, die insbesondere quer zur Hauptentfaltungsrichtung des Gassackes orientiert ist.

Aus der gattungsgemässe DE 196 02 695 C2 ist ein Gasgenerator mit einer Kühlvorrichtung bekannt, die ein Reservoir zum Speichern einer Kühlflüssigkeit in Form eines Kühlbeutels aus einer langlebigen Kunststofffolie aufweist, die mittels heißer, durch den Gasgenerator bereitgestellter Gase zerstört wird und somit das in ihr gespeicherte Kühlmittel zum Kühlen des durch den Gasgenerator erzeugten Gases freisetzt.

Der Erfindung liegt das Problem zugrunde, ein Airbagmodul der eingangs genannten Art bereitzustellen, das hinsichtlich seiner Anpassungsfähigkeit an eine zu schützende Person und eine jeweilige Unfallsituation verbessert ist.

Dieses Problem wird durch ein Airbagmodul mit den Merkmalen des Anspruchs 1 gelöst.

Danach ist das Reservoir (offen) ringförmig ausgebildet. Vorzugsweise ist das Reservoir lösbar am Diffusor befestigbar, wobei das Reservoir am Flansch des Diffusors entlang der Umfangsrichtung des Flansches umläuft.

Insbesondere weist die Kühlvorrichtung eine Bewegungserzeugungsvorrichtung auf, die dazu eingerichtet und vorgesehen ist, das Reservoir zum Freisetzen des Kühlmittels zu öffnen.

Hierdurch lässt sich mit Vorteil die Temperatur des in dem Gassack befindlichen Gases unabhängig vom Zeitpunkt der Aktivierung des Gasgenerators mittels der Kühlvorrichtung beeinflussen. Da der in dem Gassack herrschende Gasdruck proportional zur Temperatur des in dem Gassack befindlichen Gases ist, lässt sich somit der Gassack an eine zu schützende Person bzw. eine spezifische Unfallsituation anpassen. So kann z. B. bei einem leichten Unfall oder einer leichten Person, wie beispielsweise einer 5%-Frau, das Kühlen des zum Aufblasen des Gassackes verwendeten Gases relativ frühzeitig erfolgen, damit der Gassack weniger stark aufgeblasen wird, während bei einem besonders schweren Unfall oder einer sehr schweren Person (50%- und 95%-Mann) eine Kühlung des Gases entsprechend spät oder eventuell gar nicht erfolgen kann, so dass der Gassack entsprechend hart aufgeblasen wird.

Weiterhin kann beispielsweise bei einer oop-Situation (out-of-position), d.h., ein durch den Gassack zu schützender Insasse ist entlang einer Hauptentfaltungsrichtung, entlang der sich der Gassack beim Entfalten auf den Insassen zu bewegt, nicht weit genug vom Gassack entfernt, frühzeitig die Kühlung des in dem Gassack befindlichen Gases eingeleitet werden, so dass der Gassack dem geringen Abstand zwischen dem Insassen und dem Gassack entsprechend einen geringeren Gasdruck aufweist, um den Insassen beim Entfalten nicht zu verletzen.

Bevorzugt ist die Bewegungserzeugungsvorrichtung dazu ausgebildet, das Reservoir zu einem vordefinierbaren Zeitpunkt zu öffnen, wobei der Zeitpunkt in Abhängigkeit von zumindest einem durch eine Sensoreinheit erfassbaren Parameter durch eine elektronische Steuereinheit berechnet wird. Bei diesem Parameter kann es sich z.B. um die Masse des durch den Gassack zu schützenden Insassen handeln, eine unfallbedingte Verzögerung des Kraftfahrzeuges, eine Relativgeschwindigkeit zwischen dem Kraftfahrzeug und einem mit dem Kraftfahrzeug kollidierenden Kollisionsobjekt oder einen Abstand zwischen dem Gassack und einem Insassen entlang der Hauptentfaltungsrichtung des Gassackes (also die räumliche Position des Insassen im Kraftfahrzeug). Es ist natürlich auch möglich, dass die elektronische Steuereinheit eine Auswahl der vorstehenden Parameter zur Bestimmung eines Zeitpunktes der Aktivierung der Kohlvamchtung auswertet.

Vorzugsweise ist die Kühlvorrichtung dazu ausgebildet, mittels der Bewegungserieugungsvonichtung einen Verschluss einer Ausströmöffnung des Reservoirs zu öffnen, durch die hindurch das Kühlmittel in einem offenen Zustand der Ausströmöffnung in einen Innenraum des Gassackes gelangen kann. Die Ausströmöffnung ist vorzugsweise im Innenraum des Gassackes angeordnet Hierdurch kann sich mit Vorteil das Kühlmittel Innerhalb kürzester Zeit großvolumig im Innenraum verteilen und eine entsprechende effektive Kühlung des im Innenraum des Gassackes befindlichen Gases bewirken.

Vor dem Freisetzen des Kühlmittels ist die Ausströmöffnung mittels des Verschlusses abdichtend verschlossen. Zum Öffnen des Verschlusses stellt die Bewegungserzeugungsvorrichtung vorzugsweise einen den Verschluss beaufschlagenden Druck bereit.

In einer Variante der Erfindung ist der Verschluss einstückig mit dem Reservoir ausgebildet, wobei an der durch den Verschluss venschlossenen Ausströmöffnung Sollbruchstellen vorgesehen sein können, so dass der Verschluss durch ein Beaufschlagen mit Druck reproduzierbar vom Reservoir abgelöst werden kann. Alternativ ist der Verschluss vorzugsweise mit der Ausströmöffnung verklebt oder verschweißt. Bevorzugt ist der Verschluss dabei als eine die Ausströmöffnung überdeckende Folie ausgebildet, die zum Verschließen der Ausströmöffnung selbstklebend ausgebildet sein kann. Alternativ hierzu kann die Folie zum Verschließen der Ausströmöffnung mit einem Randbereich der Ausströmöffnung verschmolzen werden.

In einem anderen Ausführungsbeispiel der Erfindung ist der Verschluss als ein reversibel (zerstörungsfrei) öffenbares Ventil ausgebildet.

Bevorzugt ist die Kühlvorrichtung dazu eingerichtet und vorgesehen, einen Überdruck im Reservoir bereitzustellen, der bei geöffneter Ausströmöffnung ein Freisetzen des Kühlmittels durch die Ausströmöffnung des Reservoirs hindurch bewirkt. Ein derartiger Überdruck kann beispielsweise pyrotechnisch oder durch einen motorisch angetriebenen Stempel erzeugt werden, der gegen das Kühlmittel drückt und dadurch den im Reservoir herrschenden Druck zum Freisetzen des Kühlmittels und ggf. auch zum Öffnen des Verschlusses erhöht.

Weiterhin ist die Kühlvorrichtung bevorzugt dazu eingerichtet und vorgesehen, den Überdruck zum Freisetzen des Kühlmittels zu einem vordefinierbaren Zeitpunkt im Reservoir bereitzustellen, wobei der Zeitpunkt bevorzugt in Abhängigkeit von einer Auswahl der vorstehenden Parameter durch die elektronische Steuereinheit berechnet wird.

Bevorzugt stellt die Bewegungserzeugungsvorrichtung einen Überdruck im Reservoir bereit, der sowohl den Verschluss der Ausströmöffnung öffnet (zum Freisetzen des Kühlmittels) als auch das Kühlmittel durch die Ausströmöffnung hindurch aus dem Reservoir drückt Es ist natürlich auch möglich, dass im Reservoir ein permanenter Überdruck herrscht, In diesem Fall kann die Bewegungserzeugungsvorrichtung lediglich zum (steuerbaren) Öffnen des Verschlusses der Ausströmöffnung des Reservoirs dienen. Hierbei kann die Bewegungserzeugungsvorrichtung zum Öffnen des Verschlusses auch mechanisch mit dem Verschluss gekoppelt sein.

Bevorzugt ist die Kahlvorrichtung dazu ausgebildet, pro Zeiteinheit eine vorbestimmbare und veränderbare Menge an Kühlmittel freizusetzen. Die pro Zeiteinheit in den Innenraum des Gassackes frei zu setzende Menge des Kühlmittels kann mittels einer elektronischen Steuereinheit errechnet werden, die dazu eingerichtet und vorgesehen ist, während einer Kollision fortlaufend durch eine Sensoreinheit erfasste insassenbezogene Parameter (z.B. die Größe des zu schützenden Insassen, die Masse des Insassen oder die Position des Insassen bezüglich des sich entfaltenden Gassackes) oder fahrzeugbezogenen Parameter (Geschwindigkeit des Kraftfahrzeuges, Relativgeschwindigkeit bezüglich des Kollisionsgegners, Verzögerung des Kraftfahrzeuges während der Kollision) auszuwerten und in entsprechende Werte für die pro Zeiteinheit freizusetzende Kühlmittelmenge umzusetzen. Somit ist der zeitliche Verlauf der pro Zeiteinheit in den Gassack eingebrachten Menge des Kühlmittels in Echtzeit steuerbar. Als zu regelnde Größe kann hierbei der Druck dienen, unter den die Kühlvorrichtung das Kühlmittel setzt. Bei konstantem Austrittsquerschnitt - hierunter wird die Größe einer senkrecht zu einer Ausströmrichtung des Kühlmittel orientierten Fläche, durch die das Kühlmittel beim Austreten aus dem Reservoir strömt, verstanden - steigt die pro Zeiteinheit freigesetzte Menge Kühlmittel mit steigendem Druck. Umgekehrt kann bei quasi konstantem Druck die pro Zeiteinheit freizusetzende Menge des Kühlmittels durch Verändern des besagten Austrittsquerschnitts reguliert werden.

Als weitere Einstellgröße zur Steuerung der Kühtwirkung der Kühlvorrichtung kann bei einem flüssigen Kühlmittel die Tröpfchengröße dienen, wobei der Kühleffekt bei vergleichsweise fein versprühten Kühlmittel (kleine Tröpfchen) aufgrund der größeren effektiven Oberfläche des Kühlmittels schneller eintritt als bei vergleichsweise großen Tröpfchen. Gleiches gilt für feste Kühlmittel (Pulver und Schäume). Die Tröpfchengröße kann insbesondere durch die Form der Ausströmöffnung, insbesondere deren Austrittsquerschnitt, sowie durch Variation des Druckes unter dem das Kühlmittel steht, beeinflusst werden.

Die vorstehend beschriebenen Regelmechanlsmen können natürlich auch miteinander kombiniert werden.

In einer Variante der Erfindung steht das im Reservoir befindliche Kühlmittel derart unter einem permanenten (durch Öffnen der Ausströmöffnung abnehmenden) Druck, dass das Kühlmittel beim Öffnen des Verschlusses der Ausströmöffnung in den Innenraum des Gassackes freigesetzt wird, wo es seine druckmindernde Wirkung durch Kühlen der in den Gassack zum Aufblasen eingeleiteten Gase entfaltet.

Das Kühlmittel kann zum Freisetzen selbst unter Druck stehen, oder es ist zum Unter-Druck-Setzen des Kühlmittels ein Gaspolster im Reservoir vorgesehen, dass über einen Kolben (konstant) auf das Kühlmittel einwirkt.

Bei einem solchermaßen unter Druck stehenden Kühlmittel erfolgt eine Steuerung der pro Zeitintervall aus dem Reservoir austretenden Menge des Kühlmittels vorzugsweise durch eine Ansteuerung des Verschlusses der Ausströmöffnung, also durch ein zeitabhängiges Verändern des wirksamen Austrittsquerschnittes der Ausströmöffnung.

Hierzu ist der Verschluss der Ausströmöffnung (als ein Element einer Ventilelnheit) vorzugsweise zwischen einer ersten und einer zweiten Position hin und her bewegbar am Reservoir gelagert, wobei die Ausströmöffnung in der ersten Position des Verschlusses geschlossen ist und in der zweiten Position eine maximale Menge Kühlmittel pro Zeiteinheit durchlässt. Bevorzugt ist der Verschluss in zumindest eine zwischen der ersten und der zweiten Position befindliche Zwischenstellung anordenbar, so dass die Ausströmöffnung stufenweise geöffnet und verschlossen werden kann. Vorzugsweise kann eine kontinuierliche Bewegung des Verschlusses über eine beliebige Zahl von (jeweils arretierbaren) Zwischenstellungen ausgeführt werden, so dass die Größe des Austrittsquerschnittes exakt steuerbar (kontinuierlich veränderbar) ist Dabei wird eine Bewegung des Verschlusses zwischen zwei Positionen, also etwa zwischen zwei unterschiedlichen Zwischenstellungen, durch die Bewegungserzeugungsvorrichtung bewirkt.

In einem weiteren Ausführungsbeispiel der Erfindung ist vorgesehen, dass das Kühlmittel zum Freisetzen mit einem pyrotechnisch durch die Bewegungserzeugungsvorrichtung (Gasgenerator) erzeugtem Gas beaufschlagt wird.

Zum Beaufschlagen mit Gas ist das Kühlmittel vorzugsweise in eine Membran eingeschlossen, die vor dem Beaufschlagen mit Gas gleichzeitig als Verschluss der Ausströmöffnung fungiert, indem sie das Kühlmittel abdichtend einschließt und somit ein Austreten des Kühlmittels durch die Ausströmöffnung des Reservoirs verhindert. Dabei ist die Membran dazu eingerichtet und vorgesehen, beim Beaufschlagen mit Gas durch den vom Gas vermittelten Impuls bzw. die innere Energie des Gases zerstört zu werden, so dass der durch das erzeugte Gas im Reservoir bereitgestellte Überdruck (bezogen auf den im Gassack herrschenden Druck) ein Freisetzen (Ausströmen) des Kühlmittels durch die Ausströmöffnung des Reservoirs bewirkt.

Anstelle einer Membran kann zum Übertragen des durch die Bewegungserzeugungsvorrichtung pyrotechnisch bereitgestellten Gasdrucks auf das Kühlmitel auch ein verschieblich im Reservoir gelagerter Kolben verwendet werden, der durch Beaufschlagen mit Gas aus einer ersten in eine zweite Position bewegt wird, wobei der zweiten Position ein gegenüber der ersten Position verkleinertes Volumen des Reservoirs entspricht D.h., mittels des Kolbens wird das Kühlmittel aus dem Reservoir herausgedrückt.

In einer weiteren Variante der Erfindung wird die Bewegung des Kolbens aus der ersten in die zweite Position nicht durch eine pyrotechnisch arbeitende Bewegungserzeugungsvorrichtung bereitgestellt, sondern durch eine Bewegungserzeugungsvorrichtung in Form eines Motors, die eine drehbare Gewindestange antreibt, über die der Kolben im Reservoir gelagert ist, so dass der Kolben durch entsprechend gerichtetes Drehen der Gewindestange kontinuierlich zwischen einer ersten Position und einer zweiten Position hin und her bewegbar ist, wobei das Kühlmittel beim Bewegen des Kolbens in die zweite Position durch Kompression unter Druck gesetzt wird. Bei einer derartigen Kühlvorrichtung kann sowohl ein irreversibler (durch Zerstören öffenbarer Verschluss) als auch ein reversibler (zwischen zwei Positionen hin und her bewegbarer Verschluss) der Ausströmöffnung eingesetzt werden.

Bevorzugt wirkt die Bewegungserzeugungsvorrichtung jeweils mit einer elektronischen Steuereinheit zusammen, die die Bewegungserzeugungsvorrichtung zum Erzeugen der Bewegung des Kolbens, der Membran oder der Drehstange in Abhängigkeit von zumindest einem durch eine Sensoreinheit sensierbaren Parameter zu einem vorbestimmbaren Zeitpunkt auslöst. Das Sensieren des Parameters und das Berechnen der zu regelnden Größe (Druck des Kühlmittels in Abhängigkeit von der Zeit, Zeitpunkt des Öffnens des Verschlusses relativ zum Zeitpunkt der Aktivierung des Gassackes, Zeitdauer während der der Verschluss geöffnet ist, Austrittsquerschnitt der Ausströmöffnung in Abhängigkeit von der Zeit, sowie Tröpfchen- oder Partikelgröße des freizusetzenden Kühlmittel) erfolgt vorzugsweise in Echtzeit, d.h., während der Kollision bzw. während des Aufblasens des Gassackes.

Bevorzugt ist das Kühlmittel beim Ausströmen aus der Ausströmöffnung strömungefähig, insbesondere flüssig. In einer Variante der Erfindung ist die Ausströmöffnung derart ausgebildet, dass das flüssige Kühlmittel beim Ausströmen aus der Ausströmöffnung in den Innenraum des Gassackes in eine Vielzahl von Tröpfchen zerstäubt wird. Hierbei wird bevorzugt das Kühlmittel durch die Ausströmöffnung entlang einer zum Innenraum weisenden Ausströmrichtung in den Innenraum des Gassackes eingebracht Vorzugsweise verläuft die Ausströmrichtung entlang einer Hauptentfaltungsrichtung des Gassackes, entlang der sich der Gassack beim Aufblasen auf einen zu schützenden Insassen zu bewegt. Auf diese Weise wird eine besonders schnelle Verteilung des Kühlmittels im Innenraum des Gassackes gewährleistet.

Bevorzugt ist das Kühlmittel dazu ausgebildet, durch die Wärme des zu kühlenden Gases vaporisiert zu werden. Hierbei kann eine besonders effektive Kühlung des zum Aufblasen durch den Gasgenerator bereitgestellten Gases erreicht werden, da der Übergang des Kühlmittels aus der flüssigen in die gasförmige Phase einen Phasenübergang erster Art darstellt, bei dem die Wärme des heißen, in den Innenraum des Gassackes eingeleiteten Gases dazu dient, den Phasenübergang zu treiben, d.h., die zur Verfügung stehende Wärme des heißen Gases dient (zumindest teilweise) der Phasenumwandlung des Kühlmittels. Damit das Kühlmittel durch die Kühlvorrichtung effektiv im Innenraum des sich entfaltenden Gassackes verteilt werden kann, ragt das Reservoir samt der Ausströmöffnung zumindest abschnittsweise in den Innenraum des Gassackes hinein.

Das Kühlmittel muss allerdings nicht zwingend beim Einleiten in den Gassack einen rein flüssigen Aggregatzustand aufweisen. In einer alternativen Variante befindet sich das Kühlmittel beim Freisetzen in einem festen Aggregatzustand (z.B. Pulver oder Schaum) und wird bevorzugt durch die Kühlvorrichtung beim Freisetzen fein zerstäubt, wobei der Grad der Feinheit - ebenso wie die Tröpfchengröße bei einem flüssigen Kühlmittel - durch die Kühlvorrichtung steuerbar sein kann. Des Weiteren kann das Kühlmittel beim Freisetzen auch einen gasförmigen Aggregatzustand aufweisen. In einer weiteren Variante der Erfindung ist das Kühlmittel ein Gemisch, das gasförmige, flüssige und / oder feste Substanzen enthalten kann.

In einem weiteren Ausführungsbeispiel der Erfindung ist zusätzlich zur zeitabhängig steuerbaren Kühlung des zum Aufblasen des Gassackes verwendeten Gases eine Abströmöffnung am Gassack vorgesehen, durch die in einem geöffneten Zustand Gas aus dem Gassack abgelassen werden kann. Vor dem Aufblasen des Gassackes bzw. vor dem Aktivieren der Kühlvorrichtung ist die Abströmöffnung mittels einer Membran verschlossen, die durch Einwirken des Kühlmittels zerstört wird. Hierbei kann die Membran durch eine mechanische Einwirkung des Kühlmittels und / oder durch chemisches Einwirken des Kühlmittels auf die Membran zerstört (zersetzt) werden.

Damit das Kühlmittel effektiv auf die Membran einwirken kann, ist in einer Variante der Erfindung vorgesehen, dass zumindest ein Teil des Kühlmittels in Form eines auf die Membran gerichteten Strahls in den Gassack eingeleitet wird. Hierzu weist die Kühlvorrichtung bevorzugt eine zusätzliche, den Strahl formende Düse auf, die benachbart zu der Ausströmöffnung des Reservoirs am Reservoir ausgebildet sein kann. Sofern eine Mehrzahl an Ausströmöffnungen vorgesehen sind, können diese konzentrisch zur (zentralen) Düse angeordnet sein.

Bevorzugt weist der Gasgenerator zum Befestigen des Gasgenerators an einem Generatorträger des Airbagmoduls einen Flansch auf, der vorzugsweise vom Gasgenerator absteht und diesen im Querschnitt umläuft. Bevorzugt bildet der Generatorträgers eine Aufnahme für den Gassack (im gefalteten Zustand des Gassackes) mit einer - bezogen auf einen in ein Kraftfahrzeug eingebauten Zustand des Airbagmoduls - einem Fahrer (oder einem sonstigen Insassen) zugewandten öffenbaren Abdeckung, durch die hindurch der Gassack in einen das Airbagmodul umgebenden Außenraum entfaltbar ist. Die Abdeckung kann beispielsweise Aufreißlinien aufweisen, entlang der die Abdeckung aufreißt, wenn sich der Gassack in Folge des in den Gassack eingeleiteten Gases entlang seiner Hauptentfaltungsrichtung ausdehnt und entlang dieser Richtung gegen die Abdeckung drückt.

Vorzugsweise liegt der Abdeckung des Generatorträgers entlang der Hauptentfaltungsrichtung des Gassackes ein quer zur Hauptentfaltungsrichtung erstreckter Boden des Generatorträgers gegenüber, der über eine vom Boden abgehende Wandung des Generatorträgers mit der Abdeckung verbunden ist.

Vorzugsweise weist dieser Boden eine mittige Gasgeneratoröffnung auf, die zur Aufnahme des Gasgenerators dient, wobei die Gasgeneratoröffnung einen umlaufenden Randbereich besitzt, über den der Flansch des Gasgenerators mit dem Generatorträger verbunden ist.

Bevorzugt weist der Gassack zum Einleiten von Gas in den Innenraum des Gassackes eine Einströmöffnung auf, mit einem die Einstnömöffnung umlaufenden Randbereich, der zum Festlegen des Gassackes am Generatorträger dient. Hierbei wird der Randbereich des Gassackes zwischen dem Randbereich der Generatoröffnung und dem Flansch des Gasgenerators festgeklemmt. D.h., der Gasgenerator ragt entlang der Hauptentfaltungsrichtung des Gassackes durch die Einströmöffnung des Gassackes in den Innenraum des Gassackes hinein.

Vorzugsweise ist der Flansch über zumindest ein entlang einer Erstreckungsrichtung längs erstrecktes Verbindungselement mit dem Boden des Generatorträgers verbunden. Bei einem derartigen Verbindungselement kann es sich z.B. um eine Schraube, einen Niet oder ein ähnliches Befestigungsmittel handeln.

Bevorzugt weist der Flansch zumindest eine erste durchgängige Aussparung auf, die mit einer zweiten durchgängigen Aussparung fluchtet, die am Randbereich der Gasgeneratoröffnung des Generatorträgers ausgebildet ist, wobei bevorzugt das Verbindungselement durch die beiden miteinander fluchtenden Aussparungen des Flansches bzw. des Bodens des Generatorträgers geführt und dort geeignet festgelegt ist, so dass eine Verbindung zwischen dem Flansch und dem Boden des Generatorträgers geschaffen wird.

In einer Abwandlung ist vorgesehen, dass der Flansch zumindest eine erste durchgängige Ausnehmung aufweist, wobei der Gasgenerator mit seinem Flansch derart auf dem Randbereich der Gasgeneratoröffnung des Bodens des Generatorträgers aufliegt, dass diese erste durchgängige Ausnehmung des Flansches auf einer zweiten durchgängigen Ausnehmung des Randbereiches der Gasgeneratoröffnung zu liegen kommt.

Hierbei kann das Reservoir der Kühlvorrichtung zum Festlegen der Kühlvorrichtung am Generatorträger in die beiden Ausnehmungen eingeführt, wobei der Flansch und der Boden des Generatorträgers das Reservoir im Querschnitt einschließen.

In einer weiteren Abwandlung ist die Ausströmöffnung des Reservoirs der Kühlvorrichtung durch eine mit der Erstreckungsrichtung des Verbindungselementes fluchtende Durchgangsöffnung des Verbindungselementes gebildet. D.h., das durch die beiden miteinander fluchtenden Aussparungen des Flansches bzw. des Bodens des Generatorträgers geführte Verbindungselement dient als eine Düse der Kühlvorrichtung, durch die hindurch das Kühlmittel aus dem mit einem öffenbaren Verschluss der vorstehend beschriebenen Art versehenen Reservoir in den Innenraum des Gassackes gelangen kann. Das Reservoir ist hierbei bevorzugt an einer dem Innenraum abgewandten Außenseite des Bodens des Generatorträgers mit dem Verbindungselement verbunden. Hierzu kann an einem in den Außenraum des Airbagmoduls abstehenden freien Endbereich des Verbindungselementes ein Gewinde vorgesehen sein, auf das das Reservoir aufgeschraubt wird. Weiterhin kann das Reservoir mit dem Verbindungselement auch über eine Steckverbindung verbunden werden. Es ist auch möglich, das Reservoir mit dem Verbindungselement zu verkleben bzw. zu verschweißen. Diese Variante der Kühlvorrichtung ist vorteilhaft, da hierdurch eine besonders einfache Nachrüstung eines Airbagmoduls mit einer derartigen Kühlvorrichtung möglich ist. Hierzu muss lediglich das eine Verbindungselement (oder eines einer Mehrzahl solcher Verbindungselemente), aus seiner Einbauposition herausgenommen werden und durch ein mit der Durchgangsöffnung versehenes Verbindungselement ausgetauscht werden.

In einer weiteren Abwandlung ist das Reservoir derart ausgebildet, dass es beabstandet zu den übrigen Komponenten des Airbagmoduls in einem Kraftfahrzeug anordenbar ist, wobei die Bewegungserzeugungsvorrichtung in das Reservoir integriert ist. Zum Verbinden des Reservoirs mit einer im Innenraum des Gassackes bzw. im Innenraum des Airbagmoduls angeordneten Ausströmöffnung der Kühlvorrichtung dient eine Zuleitung, die das Reservoir beispielsweise mit dem vorstehenden die Durchgangsöffnung aufweisenden Verbindungselement verbindet, so dass das Kühlmittel über die Zuleitung in den Gassack gelangen kann.

In einer weiteren Abwandlung ist vorgesehen, dass die Kühlvorrichtung in den Gasgenerator integriert ist. Hierbei ist bevorzugt die Kühlvorrichtung derart mittig in einer dem Innenraum zugewandten Oberseite des Gasgenerators angeordnet, dass das Reservoir der Kühlvorrichtung vom Gasgenerator zumindest abschnittsweise umgeben ist, wobei die Ausströmöffnung des Reservoirs entlang der Hauptentfaltungsrichtung dem Innenraum des Gassackes zugewandt ist. Hierdurch ist mit Vorteil ein symmetrischer Aufbau der Einheit Kühlvorrichtung/Gasgenerator realisiert, der eine räumlich sehr gleichmäßige Kühlung des in dem Gassack befindlichen Gases gewährleistet.

In einer bevorzugten Ausführungsform der Erfindung ist das Reservoir (offen) ringförmig ausgebildet und vorzugsweise lösbar am Diffusor befestigbar, wobei das Reservoir am Flansch des Diffusors entlang der Umfangsrichtung des Flansches umläuft.

Das ringförmige Reservoir weist einen ersten Endabschnitt auf, an dem eine Mehrzahl an Ausströmöffnungen zum Freisetzen des Kühlmittels an einer einem Innenraum des Gassackes zugewandten Oberseite des Reservoirs ausgebildet sind, sowie einen zweiten Endabschnitt, der dem ersten Endabschnitt entlang der Umfangsrichtung gegenüberliegt.

In dem zweiten Endabschnitt des Reservoirs ist ein Kolben zum Freisetzen des Kühtmitteis verschieblich gelagert, wobei der Kolben entlang der Umfangsrichtung aus einer ersten in eine zweite Position bewegbar ist, in der er entlang der Umfangsrichtung näher am ersten Endabschnitt des Reservoirs angeordnet ist. Durch eine Bewegung des Kolbens aus der ersten in die zweite Position kann somit das in dem Reservoir gespeicherte Kühlmittel aus dem Reservoir herausgedrückt werden. Der Antrieb des Kolbens wird bevorzugt durch eine pyrotechnische Bewegungserzeugungsvorrichtung bereitgestellt, die dazu eingerichtet und vorgesehen ist, den Kolben zum Bewegen aus der ersten In die zweite Position mit Gas zu beaufschlagen.

In einer Variante der Erfindung weist die am Diffusor vorgesehene Kühlvorrichtung eine mit dem Reservoir zusammenwirkende, an das Reservoir angrenzende Druckkammer auf, die entlang des Reservoirs erstreckt ist und zum Unter-Druck-Setzen des Kühlmittels mit Gas befüllbar ist Bevorzugt sind die Druckkammer und das Reservoir durch eine Membran voneinander getrennt, so dass eine Druckerhöhung in der Druckkammer zum Unter-Druck-Setzen des Kühlmittels über die Membran auf das in dem Reservoir befindliche Kühlmittel übertragbar ist. D.h., die Membran ist durch ein Beaufschlagen mit Gas aus einer ersten Position in eine zweite Position bewegbar, wobei die Membran bei der Bewegung aus der ersten in die zweite Position das im Reservoir befindliche Kühlmittel aus dem Reservoir drückt Alternativ hierzu kann die Membran zerstört werden, sodass das Kühlmittel unmittelbar durch die Gase beaufschlagt wird. Hierbei tritt das Kühlmittel durch die Ausströmöffnungen des Reservoirs aus, die bevorzugt entlang der Umfangsrichtung gleichmäßig verteilt an einer dem Innenraum des Gassackes zugewandten Oberseite des Reservoirs angeordnet sind.

In einer Variante der Erfindung sind das Reservoir und / oder die Druckkammer einstückig mit dem Flansch des Diffusors ausgebildet, d.h., fest in den Diffusor integriert.

Alternativ hierzu kann die Kühlvorrichtung ein eigenständiges, am Diffusor befestigbares Untermodul bilden, so dass ein herkömmlicher Diffusor mit einer erfindungsgemäßen Kühlvorrichtung nachgerüstet werden kann. Ein solches Untermodul umfasst zumindest das Reservoir, ggf. die Ober die Membran mit dem Reservoir verbundene Druckkammer, sowie die Bewegungserzeugungsvorrichtung (ggf. mit Kolben). Des weiteren kann ein solches Untermodul auch die elektronische Steuereinheit zum Ansteuern der Kühlvorrichtung beinhalten. Ober eine geeignete Schnittstelle kann eine Kopplung mit der (fahrzeugseitigen) Sensoreinheit erfolgen.

Eine weitere Ausführungsform der Erfindung sieht vor, dass mehrere zusätzliche Kühlvorrichtungen vorgesehen sind, die jeweils ein Reservoir zum Speichern eines Kühlmittels umfassen, wobei das jeweilige Reservoir dazu ausgebildet ist, beim Aufbiasen des Gassackes ein Kühlmittel freizusetzen, so dass das Kühlmittel zum Kühien des zum Aufblasen des Gassackes verwendeten Gases in Kontakt mit diesem gelangen kann.

Durch die Verwendung von mehreren Kühlvorrichtung besteht auch bei der Verwendung von pyrotechnischen Bewegungserzeugungsvorrichtungen zum Beaufschlagen der Kühlmittel (um diese freizusetzen) die Möglichkeit, den zeitlichen Verlauf der Kühlung auf einfache Weise zu steuern, beispielsweise indem die einzelnen Kühlvorrichtung zu definierten (unterschiedlichen) Zeitpunkten zum Freisetzen von Kühlmitteln aktiviert werden, wobei die Menge des pro Zeiteinheit insgesamt freigesetzten Kühlmittels dadurch variierbar ist, dass die einzelnen Kühlvorrichtungen eine unterschiedliche Menge an Kühlmitteln freisetzen, etwa in dem in den einzelnen Reservoirs unterschiedliche Mengen an Kühlmitteln gespeichert sind, bzw. dass eine unterschiedliche Anzahl von Kühleinrichtungen aktiviert wird.

Des Weiteren eriaubt die Verwendung mehrerer Kühlvorrichtungen eine zeitlich und räumlich differenzierte Kühlung des im Gassack befindlichen Gases. Hierzu sind die Kühlvorrichtungen bevorzugt unterschiedlichen Bereichen des Gassackes zugeordnet. Bei einem derartigen Bereich kann es sich auch um eine separate Gassackkammer des Gassackes handeln. Dies ermöglicht es, den Gassackinnendruck gezielt anzupassen. So kann beispielsweise bei einem Gassack in Form eines Fahrergassackes der in einer zentralen, eine Auftrefffläche für den Kopf eines Insassen bildenden Gassackkammer herrschende Gassackinnendruck gezielt herabgesetzt werden, um das Verletzungsrisiko des Insassen im Gesichtsbereich zu mindern, während die die zentrale Gassackkammer umgebenden Gassackkammern wesentlich härter aufgeblasen werden können, um die zentrale Gassackkammer zu stützen.

Bevorzugt wirken die einzelnen Kühlvorrichtungen mit einer elektronischen Steuereinheit zusammen, die dazu ausgebildet ist, die einzelnen Kühlvorrichtungen in Abhängigkeit von zumindest einem durch eine Sensoreinheit sensierbaren Parameter separat zum Freisetzen von Kühlmitteln zu aktivieren, und zwar insbesondere zeitlich nacheinander. Bei jenem Parameter kann es sich um die bereits genannten Parameter handeln (Größe, Masse, Position des zu schützenden Insassen; Geschwindigkeit, Relativgeschwindigkeit, Verzögerung des Kraftfahrzeuges während einer Kollision).

Bevorzugt werden zum Kühlen des beim Aufblasen in den Gassack eingeleiteten Gases, d.h., zum Herabsetzen des Gassackinnendruckes, zwischen 0.05 g und 0,15 g Kühlmittel pro Liter Gassackvolumen in den Gassack eingeleitet. Hierdurch wird ein Druckemiedrlgung im Bereich von 10kPa erzielt.

Die erfindungsgemäße Kühlvorrichtung kann auch in Kombination mit weiteren Vorrichtungen eingesetzt werden, die ebenfalls zum Anpassen des Gassackes an unterschiedliche Crashbedingungen dienen, beispielsweise durch Steuern des im Gassack herrschenden Gasdruckes. Derartige Vorrichtungen können z.B. steuerbare Abströmöffnungen vorsehen, die abhängig von der jeweiligen Unfallsituation geöffnet werden können, so dass Gas aus dem Gassack in einen das Airbagmodul umgebenden Außenraum entweichen kann. Der Zeitpunkt der Öffnung und ggf. die Zeitdauer des geöffneten Zustandes einer solchen Abströmöffnung kann mittels einer geeigneten Steuerelektronik in Abhängigkeit von einer Auswahl der vorstehend beschriebenen Parameter berechnet werden. Natürlich können auch Gaszuleitungen, die zum Einleiten von Gas in den Gassack dienen, zusätzlich steuerbar (z.B. verschließbar) ausgebildet sein.

Des Weiteren wird nachfolgend ein Verfahren zum Rückhalten eines Insassen eines Kraftfahrzeuges mittels eines Airbagmoduls beschrieben, das sich insbesondere zur Verwendung eines erfindungsgemäßen Airbagmoduls eignet. Das Verfahren umfasst die folgenden Schritte:
- Aufblasen eines Gassackes des Airbagmoduls zum Schutz des Insassen vor kollisionsbezogenen Kräften,
- Erfassen zumindest eines insassenbezogenen oder fahrzeugbezogenen Parameters mittels einer Sensoreinheit,
- Freisetzen eines Kühlmittels mittels einer zusätzlichen Kühlvorrichtung des Airbagmoduls zum Herabsetzen eines im Gassack beim Aufblasens herrschenden Druckes,
- wobei der Zeitpunkt des Freisetzens des Kühlmittels durch eine elektronische Steuereinheit in Abhängigkeit des mindestens einen Parameters berechnet wird.

Bei dem Parameter kann es sich insbesondere um die vorgenannten Parameter handeln. D.h., als Parameter werden vorliegend insassen bezogene oder fahrzeugbezogene Parameter durch die Sensoreinheit gewonnen, die insbesondere die Position und / oder die zeitliche Veränderung der Position des zu schützenden Insassen bzw. eines an der Kollision beteiligten Fahrzeuges definieren.

Die Freisetzung des Kühlmittels kann zu einem beliebigen Zeitpunkt erfolgen, insbesondere auch bei einem nur teilweise aufgeblasenen Gassack.

Bevorzugt wird der mindestens eine Parameter während einer Kollision erfasst, wobei der besagte Zeitpunkt vorzugsweise während der Kollision (beim Aufblasen des Gassackes) in Echtzeit berechnet wird. Alternativ bzw. ergänzend hierzu kann der mindestens eine Parameter vor der Kollision durch eine Pre-Crash-Sensorik (Sensorik zum Erfassen bevorstehender Kollisionen) erfasst werden. Zeitpunkte oder Abläufe für die Aktivierung der Kühleinrichtung können dann durch eine Steuereinheit vor der Kollision berechnet bzw. aus einem Speicher der Steuereinheit abgerufen werden.

Sofern weitere Regelgrößen (wie z.B. der Druck des Kühlmittels oder der Austrittsquerschnitt der Ausströmöffnungen eines Reservoirs) der Kühlvorrichtung während des Aufblasens des Gassackes geregelt werden, wird der mindestens eine Parameter während einer Kollision mehrfach berechnet, so dass der zeitliche Verlauf der Regelgrößen an den aktuellen Wert des mindestens einen Parameters angepasst werden kann bzw. entsprechend dem aktuellen Wert geregelt werden kann. Ebenfalls kann der Parameter auch bereits vor der Kollision mehrfach berechnet werden.

Vorzugsweise wird eine Mehrzahl der bereits benannten insassenbezogenen und / oder fahrzeugbezogenen Parametern durch die Sensoreinheit (oder mehrere Sensoreinheiten) erfasst.

Bevorzugt wird das Kühlmittel während einer Zeitspanne in den Gassack eingeleitet, deren Dauer mittels der elektronischen Steuereinheit in Abhängigkeit von mindestens einem durch die Sensoreinheit erfassten Parameters vorzugsweise vor oder während der Kollision berechnet wird.

Um den zeitlichen Verlauf des im Innenraum des Gassackes herrschenden Druckes exakt an die jeweilige Unfallsituation anpassen zu können, ist vorgesehen, dass pro Zeiteinheit eine variable Menge Kühlmittel in den Gassack freigesetzt wird, wobei die Menge des pro Zeiteinheit in den Gassack eingeleiteten Kühlmittels in Abhängigkeit von dem zumindest einen Parameter durch die Steuereinheit vorzugsweise vor oder während des Unfallvorganges berechnet wird.

Bevorzugt wird das Kühlmittel zum Steuern der Menge des pro Zeiteinheit freizusetzenden Kühlmittels unter einen variierbaren Druck gesetzt. Bei hohem Druck tritt bei geöffneten Ausströmöffnungen eine verhältnismäßig größere Menge pro Zeiteinheit aus dem Reservoir aus als bei vergleichsweise niedrigerem Druck. Der Betrag des auf das Kühlmittel angewendeten Drucks wird in Abhängigkeit des mindestens einen Parameters durch die Steuereinheit vorzugsweise vor oder während der Kollision berechnet.

Des Weiteren sieht eine Variante des Verfahrens vor, dass das Kühlmittel beim Freisetzen in einzelne Partikel vorbestimmbaren Volumens fragmentiert wird, wobei das einzustellende (durchschnittliche) Volumen der Partikel in Abhängigkeit des mindestens einen Parameters durch die Steuereinheit vorzugsweise vor oder während der Kollision berechnet wird. Sofern die Kühlvorrichtung dazu ausgebildet ist, das Partikelvolumen durch Variation des Austrittsquerschnittes der mindestens einen

Ausströmöffnung einzustellen, setzt die Steuereinheit den besagten Parameter in einen einzustellenden Austrittsquerschnitt der mindestens einen Ausströmöffnung des Reservoirs um.

Unter einem Partikel wird vorliegend eine beim Freisetzen des Kühlmittels zusammenhängende Einheit des Kühlmittels verstanden (Tröpfchen, Korn etc.).

In einer anderen Variante des Verfahrens ist vorgesehen, dass zum Herabsetzen des beim Aufblasen im Gassack herrschenden Drucks mehrere Kühlvorrichtungen aktiviert werden, wobei mittels jeder der Kühlvorrichtungen eine vorbestimmbare Menge Kühlmittel zu einem vorbestimmbaren Zeitpunkt in den Gassack eingeleitet wird. Die jeweiligen - auf den Beginn der Entfaltung des Gassackes bezogenen - Zeitpunkte des Frelsetzens der Kühlmittel werden dabei bevorzugt durch die elektronische Steuereinheit in Abhängigkeit des mindestens einen Parameters vorzugsweise vor oder während des Unfallvorganges (z.B. Kollision) berechnet. Hierzu wird der Parameter ggf. mehrfach während des Unfallvorganges bzw. während des Aufblasens des Gassackes durch eine Sensoreinheit erfasst.

In einer weiteren Ausführungsform des Verfahrens ist vorgesehen, dass die mindestens eine Kühlvorrichtung in Abhängigkeit zumindest einer zusätzlichen Rückhaltevorrichtungen angesteuert wird, insbesondere in Abhängigkeit eines Gurtkraftbegrenzers zur Begrenzung der in einen Insassen im Falle eines Crashs durch einen Gurt eingeleiteten crashbezogenen Kräfte. Hierbei kann eine Sensoreinheit gurtspezifische Parameter erfassen (Gurtauszug, Geschwindigkeit des Gurtauszugs) wobei eine elektronische Steuereinheit diese Parameter zur Steuerung der Kühlvorrichtung verwendet. So kann beispielsweise bei bereits vergleichsweise großem Gurtauszug zum Zeitpunkt des Aktivieren des Gassackes darauf geschlossen werden, dass sich der Insasse in einer oop-Situation befindet, also zu nahe am Gassack positioniert ist. Die elektronischen Steuervorrichtung ist dazu ausgebildet, den Gurtauszug zu klassifizieren und zu einem entsprechend frühen Zeitpunkt eine Kühlung der im Gassack befindlichen Gase durch Auslösen der Kühlvorrichtung einzuleiten. Somit kann verhindert werden, dass der zu nahe am Gassack befindliche Insasse durch den Gassack verletzt wird.

Die dargestellten Merkmale und Vorteile der Erfindung sollen anhand der nachfolgenden Figurenbeschreibungen von Ausführungsbeispielen verdeutlicht werden.
Es zeigen:
- Fig. 1:: eine schematische Schnittansicht eines Airbagmoduls mit einer Kühlvorrichtung,
- Fig. 2:: eine schematische Schnittansicht eines Details des in der Fig. 1 gezeigten Airbagmoduls,
- Fig. 3:: eine schematische, ausschnitthafte Schnittansicht einer Abwandlung des in der Fig. 1 bzw. 2 gezeigten Airbagmoduls,
- Fig. 4:: eine schematische, ausschnitthafte Schnittansicht einer weiteren Abwandlung des in den Figuren 1 bis 3 gezeigten Airbagmoduls,
- Fig. 5:: eine schematische Schnittansicht einer Abwandlung des in den Figuren 1 und 2 gezeigten Airbagmoduls mit zwei separat ansteuerbaren Kühlvorrichtungen,
- Fig. 6:: eine schematische Schnittansicht einer Abwandiung des in der Figur 5 gezeigten Airbagmoduls, wobei die beiden Kühlvorrichtungen unterschiedlichen Kammern des Gassackes zugeordnet sind,
- Fig. 7:: eine schematische Schnittansicht einer weiteren Abwandlung des in der Figur 5 bzw. 6 gezeigten Airbagmoduls, mit drei separat auslösbaren Kühlvorrichtungen, die jeweils einer Kammer des Gassackes zugeordnet sind,
- Fig. 8:: eine schematische Schnittansicht eines Arbagmoduls der in den Figuren 1 und 2 gezeigten Art, mit einer Kühlvorrichtung, die zusätzlich zum Öffnen einer Abströmöffnung des Gassackes ausgebildet ist,
- Fig. 9:: eine Draufsicht auf eine Kühlvorrichtung der in der Figur 8 gezeigten Art, mit einer zentralen Düse zum Eröffnen der Abströmöffnung des Gassackes,
- Fig. 10:: eine schematische Schnittdarstellung einer Ausführungsform einer Kühlvorrichtung für ein Airbagmodul zum Herabsetzen des Gasinnendrucks eines Gassackes, mit einem Kolben zum Freisetzen eines in einem Reservoir der Kühlvorrichtung gespeicherten Kühlmittels in den Innenraum des Gassackes, wobei der Kolben zum Freisetzen des Kühlmittels mittels einer pyrotechnischen Bewegungserzeugungsvorrichtung angetrieben wird,
- Fig. 11:: eine schematische Schnittdarstellung einer Abwandlung der in der Figur 10 gezeigten Kühlvorrichtung, wobei das Kühlmittel zum Freisetzen des Kühlmittels Ober eine Membran mit einem Gas beaufschlagt wird,
- Fig. 12:: eine schematische Schnittdarstellung einer Abwandlung der in der Figur 10 gezeigten Kühlvorrichtung, bei der der Kolben zum Unter-Druck-Setzen des Kühlmittels über eine drehbare Gewindestange im Reservoir gelagert ist, so dass der Kolben reversibel zwischen zwei Positionen hin und her bewegbar ist,
- Fig. 13:: eine schematische Schnittdarstellung einer weiteren Ausführungsform einer Kühlvorrichtung zum Vermindern des Gasinnendruckes eines Gassackes, bei der das Kühlmittel selbst unter Druck steht,
- Fig. 14:: eine schematische Schnittdarstellung einer Abwandlung der in der Figur 13 gezeigten Kühlvorrichtung, bei der das Kühlmittel Ober ein im Reservoir vorgesehenes Gaspolster unter Druck gesetzt wird,
- Fig. 15:: eine perspektivische Ansicht einer in einen Diffusor integrierten Kühlvorrichtung für ein Airbagmodul,
- Fig. 16:: eine ausschnitthafte Schnittdarstellung des in der Figur 15 gezeigten Diffusors vor dem Auslösen der Kühlvorrichtung,
- Fig. 17:: eine ausschnitthafte Schnittdarstellung des in der Figur 15 gezeigten Diffusors nach dem Auslösen der Kühlvorrichtung,
- Fig. 18:: eine Abwandlung des in der Figur 15 gezeigten Diffusors, und
- Fig. 19:: eine graphische Darstellung der Abhängigkeit des Gassackinnendrucks von der Menge der eingeleiteten Kühlflüssigkeit für ein bestimmtes Kühlmittel und für drei verschiedene Gassackvolumina.

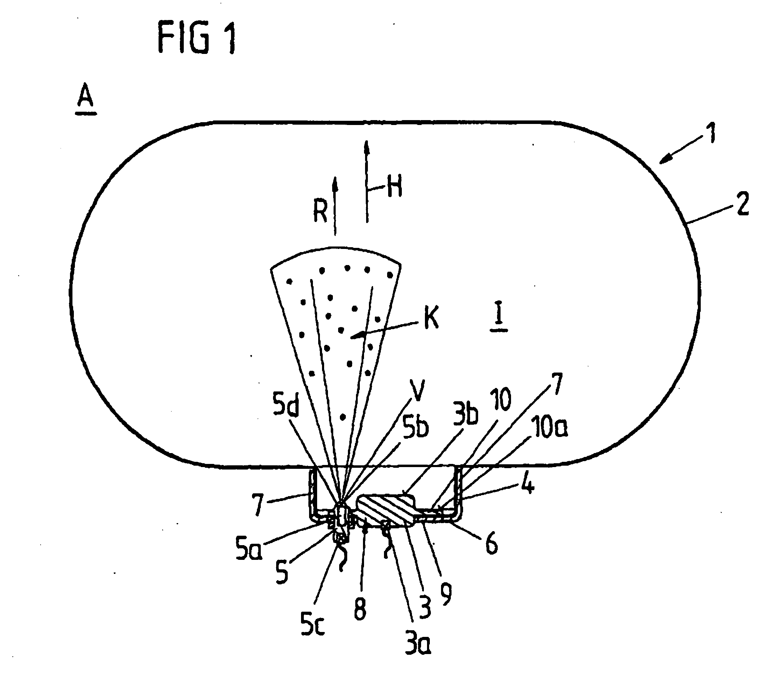

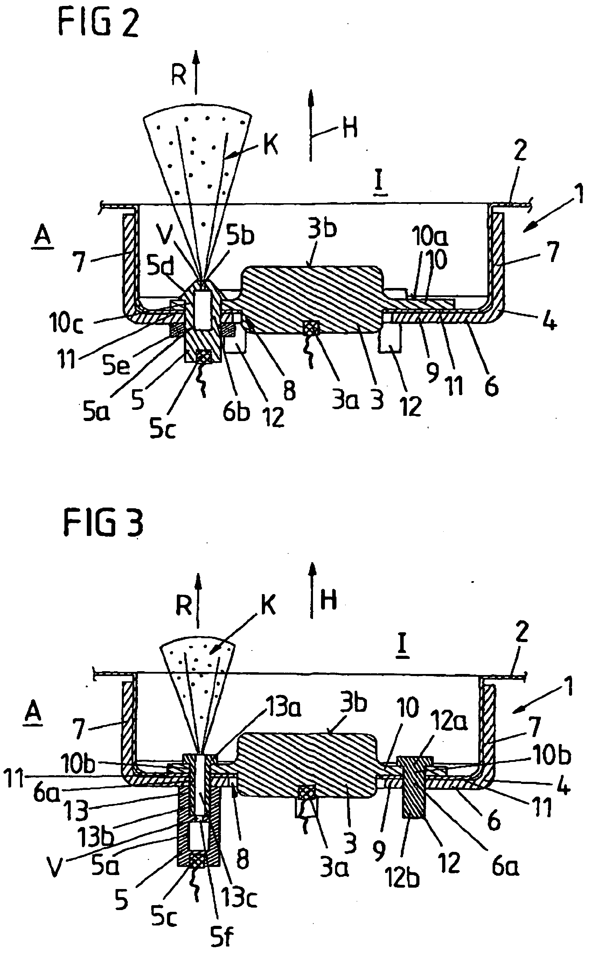

Fig. 1 zeigt im Zusammenhang mit Fig. 2 eine schematische Schnittansicht eines Airbagmoduls 1, das einen Gassack 2 aufweist, der zum Schutz einer Person aufblasbar ist, sowie einen Gasgenerator 3, der das zum Aufblasen des Gassackes 2 benötigte Gas bereitstelit. Hierzu verfügt der Gasgenerator 3 über einen Zünder 3a, der über eine fahrzeugseitige Steuerelektronik angesteuert werden kann. Der Gassack 2 und der Gasgenerator 3 des Airbagmoduls 1 sind an einem Generatorbäger 4 festgelegt, nebst einer benachbart zum Gasgenerator 3 angeordneten Kühlvorrichtung 5, die zum Kühlen des zum Aufblasen des Gassackes 2 verwendeten Gases dient. Bei dem in der Fig. 1 bzw. 2 gezeigten Airbagmodul 1 handelt es sich um ein Airbagmodul 1 zur Montage in ein Lenkrad eines Kraftfahrzeuges. Bei entsprechender Auslegung der einzelnen Komponenten kann das Airbagmodul 1 allerdings auch an anderer Stelle am Kraftfahrzeug angeordnet und zum Schutz eines Insassen eingesetzt werden. Die Schnittebene des in der Fig. 1 gezeigten Airbagmoduls 1 verläuft - bezogen auf einen in ein Lenkrad eingebauten Zustand des Airbagmoduls 1 - parallel zu einer Lenkachse des (nicht gezeigten) Lenkrades.

Der Generatorträger 4 weist eine Abdeckung auf, durch die hindurch der Gassack 2, der in der Fig. 1 in einem aufgeblasenen Zustand dargestellt ist, in einen das Airbagmodul 1 umgebenden Außenraum A entfaltbar ist, und zwar entlang einer Hauptentfaltungsrichtung H, die parallel zur Lenkachse verläuft.

Der Abdeckung des Generatorträgers 4 liegt entgegengesetzt zur Hauptentfaltungsrichtung H ein Boden 6 des Generatorträgers 4 gegenüber, der über eine entlang der Hauptentfaltungsrichtung H vom Boden 6 abstehende Wandung 7 mit der (nicht gezeigten) Abdeckung des Generatorträgers 4 verbunden ist. Der Boden 6 weist eine mittige, durchgängige Gasgeneratoröffnung 8 auf, mit einem umlaufenden, die Gasgeneratoröffnung 8 berandenden Randbereich 9, auf dem ein Flansch 10 des Gasgenerators 3 aufliegt, der den Gasgenerator 3 quer zur Hauptentfaltungsrichtung H umläuft und zur Befestigung des Gasgenerators 3 am Randbereich 9 der Gasgeneratoröffnung 8 dient. Der Flansch 10 ist dabei flächig ringförmig ausgebildet, so dass er zur flächigen Aniage an den Randbereich 9 der Gasgeneratoröffnung 8 eingerichtet ist

Der Gassack 2 weist eine Einströmöffnung auf, durch die hindurch in einen Innenraum I des Gassackes 2 Gas zum Aufblasen des Gassackes 2 eingeleitet werden kann. Zum Festlegen des Gassackes 2 an einer dem Gassack 2 zugewandten Innenseite des Bodens 6 des Generatorträgers 4 ist ein umlaufender Randbereich 11 der Einströmöffnung des Gassackes 2 entlang der Hauptentfaitungsrichtung H zwischen dem Randbereich 9 der Gasgeneratoröffnung 8 und dem Flansch 10 des Gasgenerators 3 eingeklemmt. Hierdurch ragt der Gasgenerator 3 entlang der Hauptentfattungsrichtung H durch die Einströmöffnung des Gassackes 2 in den Innenraum I des Gassackes 2 hinein.

Der Flansch 10 ist über längs erstreckte Verbindungselemente 12 mit dem Randbereich 9 der Gasgeneratoröffnung 8 verbunden. Hierzu sind an dem Flansch 10 erste Aussparungen 10b und an dem Randbereich 9 der Gasgeneratoröffnung 8 zweite Aussparungen 6a vorgesehen, die jeweils mit einer der ersten Aussparungen 10b fluchten, wobei die Verbindungselemente 12 in die miteinander fluchtenden ersten und zweiten Aussparungen 10b, 6a eingeführt sind, so dass sie sich entlang der Hauptentfaltungsrlchbang H längs erstrecken.

Die längs erstreckten Verbindungselemente 12 weisen einen verbreiterten Kopf 12a auf, der an einer dem Gassack 2 zugewandten Innenseite 10a des Flansches 10 aufliegt, und zwar auf einem die jeweilige erste Aussparung 10b berandenden Randbereich der Innenseite 10a. Von einer dem Gassack 2 abgewandten Außenseite des Bodens 6 her können die von dem Boden 6 abragenden freien Endbereiche der Verbindungselemente 12 beispielsweise mittels Muttern verschraubt werden, so dass eine stabile Verbindung zwischen Gasgenerator 3 und Generatorträger 4 geschaffen wird. Dabei wird der Flansch 10 des Gasgenerators 3 entlang der Hauptentfaltungsrichtung H gegen den Randbereich 9 der Gasgeneratoröffnung 8 gedrückt, wobei der Randbereich 11 der Einströmöffnung des Gassackes 2 fest zwischen dem Flansch 10 und dem Randbereich 9 der Gasgeneratoröffnung 8 eingespannt wird. Alternativ können die Verbindungselemente 12 auch als Nieten ausgebildet sein oder auf sonstige Weise an der dem Gassack 2 abgewandten Außenseite des Bodens 6 festgelegt sein.

Die Kühlvorrichtung 5 umfasst ein Reservoir 5a zum Speichern eines flüssigen Kühlmittels K, das durch eine Ausströmöffnung 5b in den Innenraum 1 des Gassackes 2 gelangen kann. Die Ausströmöffnung 5b ist dabei düsenförmig ausgestaltet, so dass das Kühlmittel K, wenn es aus dem Reservoir 5a durch die Ausströmöffnung 5b in den inneraum I des Gassackes 2 eingebracht wird, zerstäubt wird, d.h., in kleine Tröpfchen fraktioniert wird. Zum Herauspressen des Kühlmittels K aus dem Reservoir 5a der Kühlvorrichtung 5 weist die Kühlvorrichtung eine Bewegungserzeugungsvorrichtung 5c auf, die über eine fahrzeugseitige Steuerelektronik aktivierbar ist. Die Bewegungserzeugungsvorrichtung 5c ist dazu eingerichtet, nach ihrem Aktivieren einen Überdruck im Reservoir 5a bereitzustellen, der das Kühlmittel K gegen einen Verschluss V der Ausströmöffnung 5b drückt. Diese wird aufgrund des durch die Bewegungserzeugungsvorrichtung 5c im Reservoir 5a bereitgestellten Überdrucks geöffnet, so dass das Kühlmittel K entlang einer Ausströmrichtung R durch die Ausströmöffnung 5b hindurch in den Innenraum I des Gassackes 2 freigesetzt wird. Der Verschluss V der Ausströmöffnung 5b kann hierbei einstückig mit dem Reservoir 5a der Kühlvorrichtung 5 ausgebildet sein und in Folge des Überdrucks aufreißen. Ebenso ist ein reversibel öffen- bzw. verschließbares Ventil als ein Verschluss V der Ausströmöffnung 5b einsetzbar, das unabhängig von der Bewegungserzeugungsvorrichtung 5c angesteuert werden kann, um die Ausströmöffnung 5b freizugeben. Entscheidend ist, dass die Aktivierung der Kühlvorrichtung 5 vollständig unabhängig von der Aktivierung des Gasgenerators 3 erfolgen kann. Hierbei kann abhängig von einer spezifischen Unfallsituation mittels einer geeigneten elektronischen Steuereinheit der Zeitpunkt der Aktivierung der Kühlvonichtung 5 berechnet werden. Bei einem reversibel öffen- bzw. verschließbaren Verschluss V der Ausströmöffnung 5b ist zudem denkbar, dass zur Dosierung des Kühlmittels K mittels der elektronischen Steuereinheit eine Zeitspanne berechnet wird, während der das Kühlmittel K durch die Ausströmöffnung 5b In den Innenraum I des Gassackes 2 freigesetzt wird. Hierzu kann ein Überdruck im Reservoir 5a, der das Kühlmittel K In den Innenraum I des Gassackes 2 befördert, durch eine reversibel arbeitende Bewegungserzeugungsvorrichtung bereitgestellt werden, beispielsweise durch einen motorisch angetriebenen Stempel, der entlang der Ausströmrichtung R gegen das flüssige Kühlmittel K drückt.

Da bei konstantem Volumen der Druck des in dem Gassack 2 befindlichen Gases proportional zur Temperatur des Gases Ist, wird durch das Abkühlen eine Verminderung des in dem Gassack 2 herrschenden Gasdruckes erzlelt. D.h., mittels der steuerbaren Kühlung des im Gassack 2 befindlichen Gases kann der Gassack 2 an eine spezifische Unfalisituation angepasst werden. So kann beispielsweise eine frühzeitige Kühlung des Gases (Verminderung des Gasdruckes) erfolgen, wenn ein Fahrer entlang der Hauptentfaltungsrichtung H des Gassackes 2 einen zu geringen Abstand zum Gassack aufweist (out-of-position).

Zur Befestigung der Kühlvorrichtung 5 am Airbagmodul 1 ist an dem Flansch 10 des Gasgenerators 3 eine erste Ausnehmung 10c und an dem Randbereich 9 der Gasgeneratoröffnung 8 eine zweite Ausnehmung 6b vorgesehen, die im Wesentlichen deckungsgleich ausgebildet sind und miteinander fluchten. Die Kühlvorrichtung 5 ist in diese miteinander fluchtenden Ausnehmungen 10c, 6b eingeführt, so dass das Reservoir 5a der Kühlvorrichtung 5 im Querschnitt durch den Flansch 10 und den Randbereich 9 der Gasgeneratoröffnung 8 umgeben ist.

Zum Festlegen der Kühlvorrichtung 5 an den beiden miteinander fluchtenden Ausnehmungen, weist die Kühlvorrichtung 5 einen an seiner Basis verbreiterten, konisch ausgeformten Kopf 5d auf, der die Ausströmöffnung 5b umgibt und auf einem die erste Ausnehmung 10c des Flansches 10 berandenden Randbereich der Innenseite 10a des Flansches 10 aufliegt. Von der dem Innenraum 1 abgewandten Außenseite des Bodens 6 her ist die Kühlvorrichtung 5 mittels einer Mutter 5e, die das Reservoir 5a der Kühlvorrichtung 5 im Querschnitt umgreift, mit dem Boden 6 bzw. dem Flansch 10 des Gasgenerators 3 verschraubt. Die Kühlvomchtung 5 kann natürlich auch auf eine andere bekannte Weise am Boden 6 bzw. am Flansch 10 festgelegt werden.

Die Ausströmöffnung 5b der Kühlvorrichtung 5 ist insbesondere derart am Reservoir 5a ausgebildet, dass die Ausströmrichtung R, entlang der das flüssige Kühlmittel K in den Innenraum I des Gassackes 2 freigesetzt wird, im Wesentlichen parallel zur Hauptentfaftungsrichtung H des Gassackes 2 verläuft. Der Kühleffekt tritt dadurch ein, dass das Kühlmittel K zerstäubt wird und durch das heiße, im Innenraum I befindliche Gas vaporisiert wird, wobei die Temperatur des Gases abgesenkt wird, da zur Umwandlung der flüssigen Phase des Kühlmittels in die gasförmige Phase Energie aufgebracht werden muss.

Figur 3 zeigt eine Abwandlung des in den Figuren 1 und 2 gezeigten Airbagmoduls 1. Hierbei wird im Unterschied zur Kühlvorrichtung 5 der Figur 1 bzw. 2 das Gehäuse der Kühlvorrichtung 5 durch ein Verbindungselement 13 (entsprechend dem Verbindungselement 12 der Figur 2) und ein Reservoir 5a gebildet, das von einer dem Innenraum I abgewandten Außenseite des Bodens 6 her mit einem freien Endbereich 13b des Verbindungselements 13 verbunden ist, der entgegengesetzt zur Hauptentfaltungsrichtung H von der Außenseite des Bodens 6 absteht. Das Reservoir 5a weist eine Ausströmöffnung 5f auf, die vor einem Aktivieren der Kühlvorrichtung 5 mittels des Verschlusses V verschlossen ist, der gemäß der Figur 2 ausgebildet sein kann. An dem Verbindungselement 13 ist gegenüber dem Verbindungselement 12 der Figur 2 zusätzlich eine entlang der Hauptentfaltungsrichtung H erstreckte Durchgangsöffnung 13c ausgebildet, die den Innenraum **I** des Gassackes 2 mit dem Reservoir 5a der Kühlvorrichtung 5 über die Ausströmöffnung 5f verbindet.

Zum Verbinden des Reservoirs 5a der Kühlvorrichtung 5 mit dem freien, von der Außenseite des Bodens 6 abragenden Endbereich 13b des Verbindungselements 13, kann insbesondere eine Schraubverbindung zwischen dem freien Endbereich 13b und dem Reservoir 5a dienen. Hierzu weist der freie Endbereich 13b ein Gewinde auf, das in ein Gewinde des Reservoirs 5a an einer dem freien Ende 13b zugewandten Aussparung des Reservoirs 5a eingreift. Natürlich kann das Reservoir 5a auch mit dem freien Ende 13b des Verbindungselements 13 verklebt, verklemmt oder verschweißt werden.

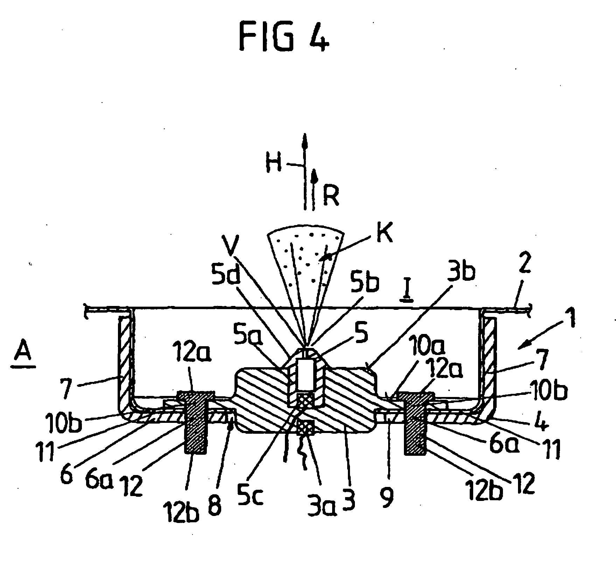

Figur 4 zeigt eine weitere Abwandlung des in den Figuren 1 bis 3 gezeigten Airbagmoduls 1, bei der im Unterschied zu den Figuren 1 bis 3 die Kühlvorrichtung 5 nicht teilweise im Außenraum A des Airbagmoduls 1 angeordnet ist, sondern vollständig innerhalb des Innenraumes I des Airbagmoduls 1 bzw. des Gassackes 2. Hierzu ist an einer dem innenraum **I** zugewandten Oberseite 3b des Gasgenerators 3 eine Ausnehmung vorgesehen, in die die Kühlvorrichtung 5 vollständig integriert ist, so dass das Reservoir 5a der Kühlvorrichtung 5 bis auf den Kopf 5d der Kühlvorrichtung 5 im Querschnitt vom Gasgenerator 3 umgeben ist. Hierbei liegt der verbreiterte Kopf 5d der Kühlvorrichtung 5 auf einem Randbereich der dem Innenraum **I** zugewandten Oberseite 3b des Gasgenerators 3 auf, der die Ausnehmung, in die die Kühlvorrichtung 5 formschlüssig eingelassen ist, berandet. Der Vorteil einer derartigen Anordnung der Kühlvorrichtung 5 am Gasgenerator 3 besteht in der zur Hauptentfaltungsrichtung H rotationssymmetrischen Ausformung der Einheit Kühlvorrichtung 5 / Gasgenerator 3.

Hierdurch wird nämlich bewirkt, dass eine Kühlung des in den Innenraum 1 des Gassackes 2 eingeleiteten Gases 2 quer zur Hauptentfaltungsrichtung H vollständig gleichmäßig erfolgen kann. Die Ausströmöffnung 5b der Kühlvorrichtung 5 ist hierbei entlang der Hauptentfaltungsrichtung H dem Innenraum I des Gassackes 2 zugewandt.

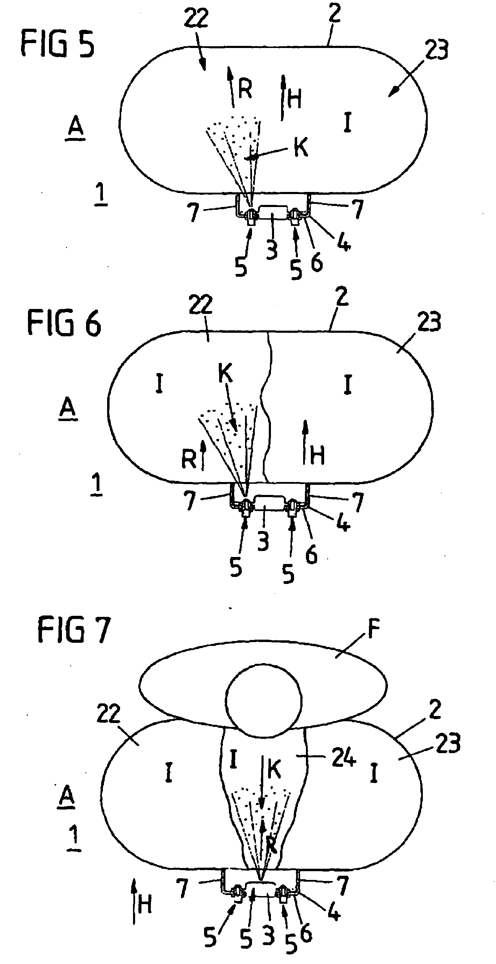

Figur 5 zeigt eine schematische Schnittansicht einer Abwandlung des In den Figuren 1 und 2 gezeigten Airbagmoduls 1, wobei im Unterschied zu den Figuren 1 und 2 eine zusätzliche zweite Kühlvorrichtung 5 vorgesehen ist. Zur Befestigung dieser zusätzlichen Kühlvorrichtung 5 am Airbagmodul 1 ist an dem Flansch 10 des Gasgenerators 3 eine weitere erste Ausnehmung 10c und an dem Randbereich 9 der Gasgeneratoröffnung 8 eine weitere zweite Ausnehmung 6b vorgesehen, die im Wesentlichen deckungsgleich ausgebildet sind und miteinander fluchten. Die Kühlvorrichtung 5 ist - wie in der Figur 2 dargestellt - in diese miteinander fluchtenden weiteren Ausnehmungen 10c. 6b eingeführt, so dass das Reservoir 5a der weiteren Kühlvorrichtung 5 ebenfalls im Querschnitt durch den Flansch 10 und den Randbereich 9 der Gasgeneratoröffnung 8 umgeben ist. Dabei liegt die zusätzliche Kühlvorrichtung 5 der anderen Kühlvorrichtung 5 quer zur Hauptentfaltungsrichtung H gegenüber, so dass der Gasgenerator 3 zwischen den beiden Kühlvorrichtungen 5 angeordnet ist. Mittels der beiden Kühlvorrichtungen 5 können unterschiedliche Bereiche 22, 23 des Gassackes 2 unabhängig voneinander gekühlt werden. Bei den beiden Bereichen 22, 23 kann es sich zum Beispiel - bezogen auf eine Geradeausfahrtstellung des Lenkrades in das das Airbagmodul 1 einzubauen ist - um eine rechte und linke Gassackhälfte 22, 23 des Gassackes 2 handeln. Somit kann bei einem Frontalcrash mit einem Seitenanteil in einem Gassack 2 durch lokales Kahlen der rechten oder linken Gassackhälfte 22, 23 ein dem Seitenanteil der Kollision entsprechender Druckverlauf erzielt werden.

Des Weiteren kann bei einem zeitlich versetzten Auslösen der beiden Kühlvorrichtungen ein stufenweises Vermindern des Gassackinnendruckes erfolgen.

Figur 6 zeigt eine Abwandlung des in der Figur 5 gezeigten Airbagmoduls 1 wobei im Unterschied zur Figur 5 die rechte und die linke Gassackhälfte 22, 23 voneinander getrennte Gassackkammem des Gassackes 2 bilden, wobei jeder Gassackkammer 22, 23 eine der beiden Kühlvorrichtungen 5 zugeordnet ist, so dass der in den Innenräumen I der beiden Gassackkammem 22, 23 herrschende Gassackinnendruck unabhängig voneinander einstellbar ist.

Figur 7 zeigt eine weitere Abwandlung des in der Figur 6 dargestellten Airbagmoduls 1, wobei im Unterschied zur Figur 6 eine weitere entlang der Hauptentfaltungsrichtung H erstreckte Gassackkammer 24 vorgesehen ist, die quer zur Hauptentfaltungsrichtung H zwischen der rechten und der linken Gassackkammer 22, 23 angeordnet ist. Die weitere, zentrale Gassackkammer 24 bildet an einer einem Fahrer F zugewandten Seite eine Auftrefffläche für den Kopf des Fahrers F (Insassen) aus. Zum Steuern des Gasinnendruckes jener zentralen Gassackkammer 24 des Gassackes 2 ist eine Kühlvorrichtung 5 nach Art der Figur 4 vorgesehen, die in die dem Insassen F zugewandte Oberseite 3b des Gasgenerators 3 integriert ist und das Kühlmittel K entlang einer mit der Hauptentfaltungsrichtung H des Gassackes 2 zusammenfallenden Ausströmrichtung R verströmt.

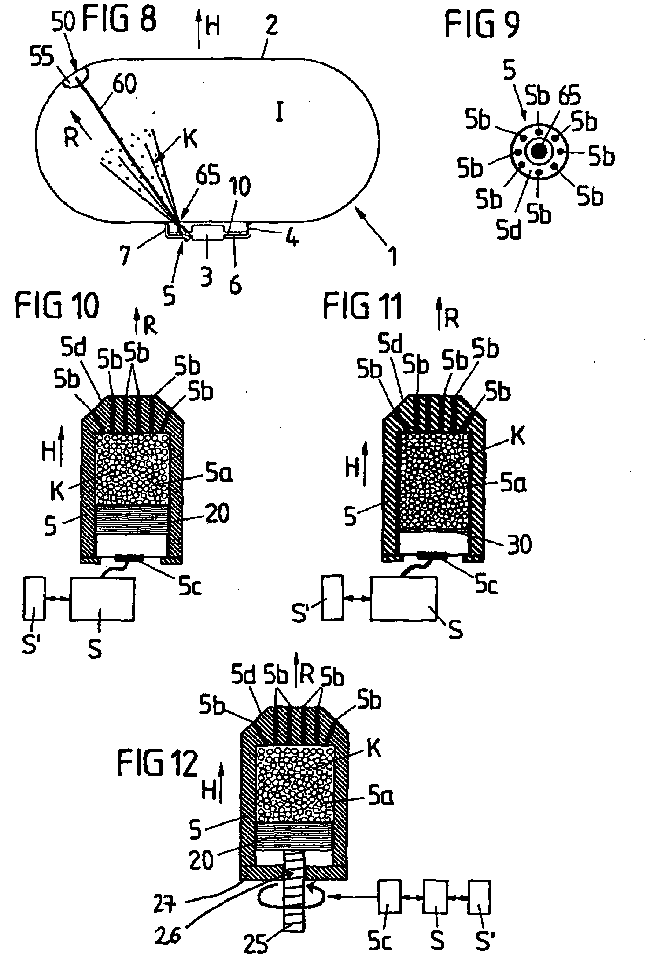

Figur 8 zeigt eine schematische Schnittansicht einer Abwandlung des in den Figuren 1 und 2 gezeigten Airbagmoduls 1, wobei im Unterschied zu den Figuren 1 und 2 die Kühlvorrichtung 5 zusätzlich dazu eingerichtet und vorgesehen ist, einen gebündelten Kühlmittelstrahl 60 zu erzeugen, der derart beschaffen ist, dass er eine am Gassack 2 festgelegte Membran 55 zerstört, die eine Abströmöffnung 50 des Gassackes 2 (vom Außen- oder vom Innenraum **I** her) verdeckt. Somit kann die Abströmöffnung 50 zum Entlüften des Gassackes 2 (beispielsweise in einer oop-Sltuatlon) zeitabhängig mittels der Kühlvorrichtung 5 geöffnet werden. Dabei kann der Strahl 60 des verwendeten Kühlmittels K derart ausgebildet werden, dass die Membran 55 mechanisch zerstört (zerrissen) wird. Alternativ hierzu kann das Kühlmittel K ein Lösungsmittel für die Membran 55 bilden, so dass die Membran 55 durch das Kühlmittel zersetzt (aufgelöst) wird sobald das Kühlmittel K mit der Membran 55 in Kontakt gerät.

Des Weiteren ist die Längsachse der Kühlvorrichtung 5, die mit der Ausströmrichtung R zusammenfällt, im Gegensatz zu den Figuren 1 und 2 gegenüber der Hauptentfaltungsrichtung H geneigt, so dass der Strahl 60 eine seitlich am Gassack 2 vorgesehene Membran 55 treffen kann.

Zum Ausformen des Strahls 60 weist die Kühlvorrichtung 5 eine zentrale Düse 65 auf, deren Austrittsquerschnitt größer ausgebildet ist als der der übrigen Ausströmöffnungen 5b der Kühlvorrichtung 5, die lediglich zum Freisetzen des Kühlmittels K dienen. Vorzugsweise sind die Ausströmöffnungen 5b entlang eines die zentrale Düse 65 umlaufenden Kreises angeordnet, so dass das Kühlmittel K zylindersymmetrisch zum Strahl 60 in den Innenraum I des Gassackes 2 eingebracht werden kann.

Figur 10 zeigt eine schematische Schnittansicht einer Kühlvorrichtung 5 der in den Figuren 1 bis 9 gezeigten Art, mit einem Reservoir 5a, in dem ein flüssiges Kühlmittel gespeichert ist, das zum Herabsetzen des Gasinnendruckes des Gassackes 2 beim Aufblasen des Gassackes 2 in den Innenraum I des Gassackes 2 eingeleitet wird. Das Reservoir 5a der Kühlvorrichtung 5 weist eine zylindrische Wandung auf, deren Längsachse entlang der Hauptentfaltungsrichtung H verläuft. Das Reservoir 5a weist einen konisch zulaufenden Kopf 5d mit kanalartigen Ausströmöffnungen 5b auf, die benachbart zur Wandung eine Neigung gegenüber der Hauptentfaitungsrichtung H aufweisen, so dass das Kühlmittel K unter einem entsprechend großem Raumwinkel um die mit der Hauptentfaltungstichtung H zusammenfallende Ausströmrichtung R in den Innenraum I des Gassackes 2 versprüht werden kann.

In einem dem Kopf 5d entlang der Längsachse des Reservoirs 5a gegenüberliegenden Abschnitt des Reservoirs 5a ist ein Kolben 20 entlang der Längsachse des Reservoirs 5a verschieblich in dem Reservoir 5a gelagert, so dass der Kolben 20 beim Verschieben in Richtung auf den Kopf 5d des Reservoirs 5a das in dem Reservoir 5a gespeicherte Kühlmittel K durch die Ausströmöffnungen 5b in den Innenraum I des Gassackes 2 drückt, wobei die Ausströmöffnungen 5b des Reservoirs 5a derart bemessen sind, dass das Kühlmittel K beim Verlassen des Reservoirs 5a in feine Tröpfchen zerstäubt wird. Zum Abdichten des Reservoirs 5a liegt der Kolben 20 mit einem umlaufenden, äußeren Randbereich vorzugsweise abdichtend an der Wandung des Reservoirs 5a an.

Zum Verschieben des Kolbens 20 aus seiner anfänglichen ersten Position in seine näher am Kopf 5d gelegene zweite Position, dient eine Bewegungserzeugungsvorrichtung 5c, die dazu ausgebildet ist, den Kolben 20 auf seiner dem Kopf 5d abgewandten Seite mit einem pyrotechnisch erzeugten Gas zu beaufschlagen.

Vor dem Freisetzen des Kühlmittels K können die Ausströmöffnungen 5b einzeln oder gemeinsam mittels einer Folie verschlossen sein. Eine derartige Folie kann innen oder außen am Reservoir 5a vorgesehen werden.

Der Zeitpunkt des Beaufschlagens des Kolbens 20 mit einem Gas (relativ zum Anfangszeitpunkt der Entfaltung des Gassackes) wird dabei durch eine mit der Bewegungserzeugungsvorrichtung 5c gekoppelte elektronische Steuereinheit S berechnet, und zwar in Abhängigkeit von den benannten insassen- bzw. fahrzeugbezogen Parametern. Die Berechnung des Zeitpunktes erfolgt in Echtzeit. Zur Erfassung der vorgenannten Parameter können auch Sensoreinheiten S' in Form von Pre-Crash-Detektoren (d.h., Detektoren, die zum Erkennen einer bevorstehenden, noch nicht eingetretenen Kollision eingerichtet und vorgesehen sind) verwendet werden.

Figur 11 zeigt eine schematische Schnittansicht einer Abwandlung der in der Figur 10 gezeigten Kühlvorrichtung 5, wobei im Unterschied zur Figur 10 kein Kolben 20 vorgesehen ist, sondern das Kühlmittel K vor dem Auslösen der Bewegungserzeugungsvorrichtung 5c in einer zerstörbaren Hülle in Form einer Membran 30 eingeschlossen ist. Beim Beaufschlagen mit dem durch die Bewegungserzeugungsvorrichtung 5c bereitgestellten Gas zerptatzt jene Membran 30 und das Kühlmittel K wird durch den durch die Bewegungserzeugungsvorrichtung 5c im Reservoir 5a erzeugten Gasdruck aus dem Reservoir 5a herausgedrückt.

Figur 12 zeigt eine schematische Schnittansicht einer Abwandlung der in den Figuren 10 und 11 gezeigten Kühlvorrichtung 5, bei der der Kolben 20 über eine motorisch antreibbare Gewindestange 25 kontinuierlich zwischen einer ersten und einer zweiten Position hin und her bewegbar im Reservoir 5a gelagert ist.

Die Gewindestange 25 weist ein Gewinde auf und steht von einer dem Kopf 5d abgewandten Seite des Kolbens 20 entgegen der Hauptentfaltungsrichtung H, d.h., entlang der Längsachse des Reservoirs 5a, ab und ist in eine mit einem Gewinde versehene mittige Ausnehmung 26 eines Bodens 27 des Reservoirs 5a eingeschraubt, so dass sie durch Drehen um ihre Längsachse, die mit der Hauptentfaltungsrichtung H zusammenfällt, in Richtung auf die Ausströmöffnungen 5b oder von diesen weg verlagert wird. Dementsprechend wird der mit der Gewindestange 25 verbundene Kolben 20 im Reservoir 5a entlang der Längsachse des Reservoirs 5a bzw. der Gewindestange 25 hin und her bewegt. Die Gewindestange 25 ist vorzugsweise mit einer Bewegungserzeugungsvorrichtung 5c in Form eines Motors gekoppelt, die dazu eingerichtet ist die Gewindestange 25 um ihre Längsachse zu drehen, um den Kolben 20 zum definierten Freisetzen des Kühlmittels K zu verlagern.

Die Bewegungserzeugungsvorrichtung 5c ist entsprechend den Figuren 10 und 11 mit einer elektronischen Steuereinheit S gekoppelt, die dazu ausgebildet ist, die Bewegungserzeugungsvorrichtung 5c anzusteuern, und zwar in Abhängigkeit von zumindest einem Parameter, der mittels einer Sensoreinheit S' erfassbar ist, die mit der Steuereinheit S gekoppelt ist. Dabei erfasst die Sensoreinheit S' den mindestens einen Parameter während einer Kollision mehrfach, bevorzugt in regelmäßigen Abständen, so dass der auf das Kühlmittel K wirkende Druck zum definierten Freisetzen des Kühlmittels K in Echtzeit durch die mit der Bewegungserzeugungsvorrichtung 5c zusammenwirkende elektronische Steuereinheit S regelbar ist.

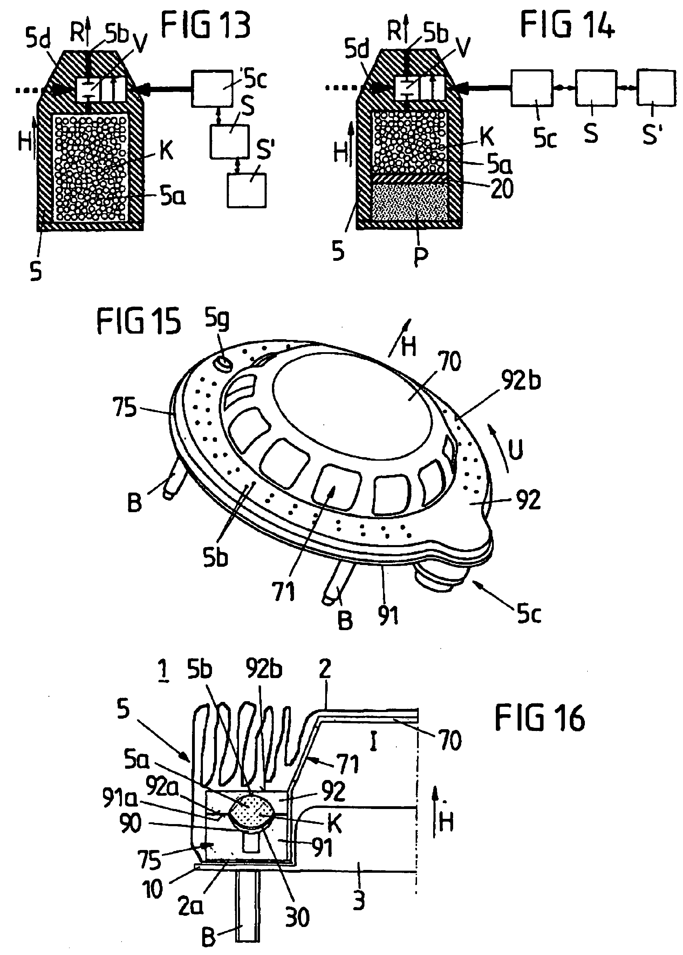

Figur 13 zeigt eine schematische Schnittansicht einer weiteren Ausführungsform einer Kühlvorrichtung 5, bei der im Unterschied zu den Figuren 10 bis 12 das Kühlmittels K selbst unter Druck steht. Zum Freisetzen des Kühlmittels K wird ein mittels einer Bewegungserzeugungsvorrichtung 5c öffenbarer Verschluss V geöffnet, wobei der Verschluss V vorzugsweise kontinuierlich öffenbar ist, d.h., mittels des Verschlusses V ist der Austrittsquerschnitt der Ausströmöffnungen 5b veränderbar.

Zum Regeln des Austrittsquerschnittes der Ausströmöffnungen 5b in Abhängigkeit zumindest eines der bereits genannten relevanten insassen- und fahrzeugbezogenen Parametern, ist die (reversibel arbeitende) Bewegungserzeugungsvorrichtung 5c mit einer elektronischen Steuereinheit S gekoppelt, die in Abhängigkeit des mindestens einen Parameters, der durch die mit der Steuereinheit S gekoppelte Sensoreinheit S' erfasst wird, errechnet, zu welchem Zeitpunkt und über welche Zeitdauer der Verschluss V geöffnet wird und die Bewegungseneugungsvorrichtung 5c entsprechend ansteuert.

Figur 14 zeigt eine schematische Schnittdarstellung einer Abwandlung der in der Figur 13 gezeigten Kühlvorrichtung 5, wobei im Unterschied zur Figur 13 das Kühlmittel K nicht selbst unter Druck steht, sondern von einem im Reservoir 5a bereitgestellten Gaspolster P beaufschlagt wird, das über einen Kolben 20 auf das Kühlmittel K einwirkt.

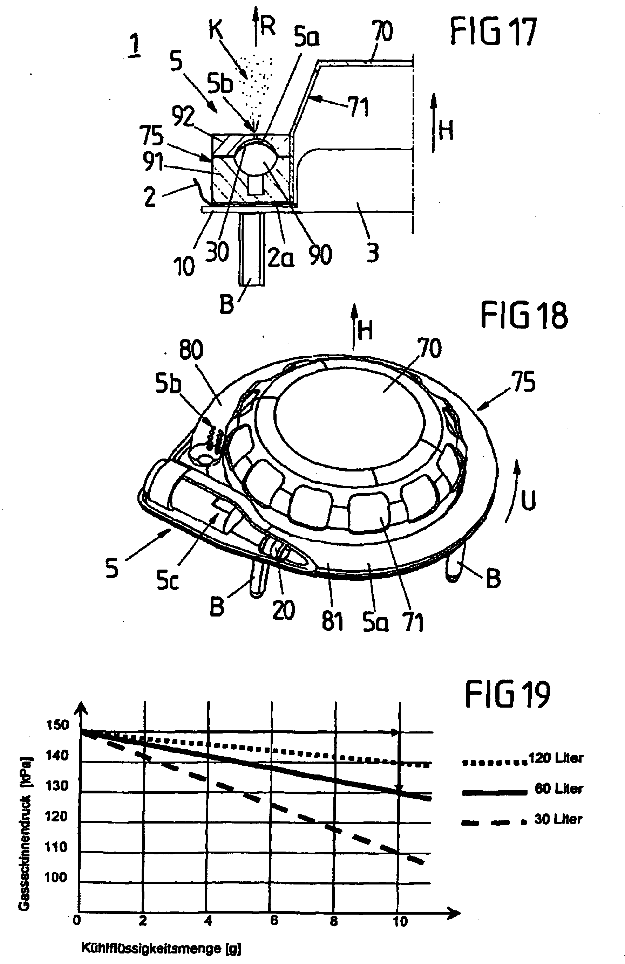

Figur 15 zeigt im Zusammenhang mit den Figuren 16 und 17 einen kappenförmiger Diffusor 70, der durch eine Einströmöffnung des Gassackes 2 entlang der Hauptentfaltungsrichtung H in den Innenraum **I** des Gassackes 2 hineinragt. An dem Diffusor 70 sind eine Mehrzahl von Durchströmöffnungen 71 vorgesehen, durch die vom Gasgenerator 3 zum Aufblasen des Gassackes 2 erzeugtes Gas in den Innenraum I des Gassackes 2 strömen kann. Zum Festlegen des Diffusors 70 an einem umlaufenden Flansch 10 des Gasgenerators 3 (entsprechend den Figuren 1 bis 4) weist der Diffusor 70 seinerseits einen am Flansch 10 des Gasgenerators 3 festlegbaren Flansch 75 auf, der den Diffusor 70 entlang einer quer zur Hauptentfattungsrichtung H orientierten Umfangsrichtung U umläuft. Vorzugsweise wird ein die Einströmöffnung des Gassackes 2 umlaufender Randbereich 2a des Gassackes 2 zum Festlegen des Gassackes 2 am Airbagmodul 1 zwischen dem Flansch 10 des Gasgenerators 3 und dem Flansch 75 des Diffusors 70 eingeklemmt.

Vom Flansch 75 des Diffusors 70 ragen entgegen der Hauptentfaltungsrichtung Bolzen B ab, Ober die der Diffusor 70 an einem Teil des Airbagmoduls 1, insbesondere an einem Generatorträger 4 festlegbar ist. Des Weiteren können die Bolzen B zum Festlegen des gesamten Airbagmoduls 1 an einem Kraftfahrzeugteil dienen.

Der Flansch 75 des Diffusors besteht aus zwei den Diffusor 70 ringförmig umlaufenden, aneinander anliegenden (schalenförmigen) Elementen 91, 92, und zwar einem - bezogen auf die Hauptentfaltungsrichtung H - oberen Element 92 und einem unteren Element 91, wobei die beiden Elemente 91, 92 an einander zugewandten Seiten 91a, 92a, über die sie aneinander anliegen, jeweils den Diffusor 70 entlang der Umfangsrichtung U umlaufende deckungsgleiche Ausnehmungen aufweisen, so dass die beiden aneinander anliegenden Elemente 91, 92 eine insbesondere ringförmige Kammer ausbilden bzw. begrenzen.

Diese Kammer ist durch eine Membran 30 geteilt, wobei der - bezogen auf die Hauptentfaltungsrichtung H - obere, den Diffusor 70 umlaufende Bereich der Kammer ein Reservoir 5a für ein Kühlmittel K bildet und der untere umlaufende Bereich der Kammer, der durch die Membran 30 vom Reservoir 5a getrennt ist, eine mit Gas befüllbare Druckkammer 90 bildet.

Zum Freisetzen des Kühlmittels K weist das obere Element 92 an einer dem Innenraum I des Gassackes 2 zugewandten Oberseite 92b eine Mehrzahl an Ausströmöffnungen 5b auf, die gleichmäßig entlang der Umfangsrichtung U an jener Oberseite 92b angeordnet sind, und die vor einem Auslösen der Kühlvorrichtung K mittels einer mit der Oberseite 92b verklebten Folie verschlossen sein können. Ferner ist an der Oberseite 92b eine Einfüllöffnung 5g vorgesehen, über die das Reservoir 5a mit einem Kühlmittel K befüllbar ist.

Zum Befüllen der Druckkammer 90 mit einem Gas derart, dass sich die Membran 30 entlang der Hauptentfaltungsrichtung H in Richtung auf das Reservoir 5a verlagert (vgl. Figur 17) und das Kühlmittel K aus den Ausströmöffnungen 5b drückt (hierbei wird die besagte Folie zerstört oder abgelöst), weist die Kühlvorrichtung 5 eine Bewegungserzeugungsvorrichtung 5c in Form eines längs erstreckten Gasgenerators auf, dessen Längsachse vorzugsweise entlang der Hauptentfaltungsrichtung H orientiert ist. Die Bewegungserzeugungsvorttchtung 5c ist entsprechend den Figuren 10 und 11 mit einer elektronischen Steuereinheit S gekoppelt, die die Bewegungserzeugungsvorrichtung 5c in Abhängigkeit zumindest eines mit einer Sensoreinheit S' ermittelten insasse- oder fahrzeugbezogenen Parameters ansteuert.

Die Membran 30 kann zwischen den beiden aneinander anliegenden Elementen 91, 92 festgeklemmt sein und somit eine Abdichtung der Kammer (Reservoir 5a und Druckkammer 90) bereitstellen. Vorzugsweise ist eines der beiden Elemente, z.B. das untere Element 91 am Diffusor 70 festgelegt bzw. einstückig mit diesem verbunden, während das obere Element 92 am unteren Element 91 festgelegt ist. Dabei kann das obere Element 92 beispielsweise mit dem unteren Element 91 (ggf. unter Zwischenlage der Membran 30) zur Ausbildung des Reservoirs 5a bzw. der Druckkammer 90 verschraubt oder verkrimpt sein.

Figur 18 zeigt eine perspektivische Ansicht einer Abwandlung der in den Figuren 15 bis 17 gezeigten Kühlvorrichtung 5. Hierbei ist das Reservoir 5a vorzugsweise ringförmig ausgebildet und entlang der Umfangsrichtung U um den Diffusor 70 herumgelegt, wobei es mit dem Flansch 75 des Diffusors 70 lösbar oder fest verbunden sein kann (z.B. durch Verkrimpen).

Das Reservoir 5a weist einen ersten und einen zweiten Endabschnitt 80, 81 auf, die einander entlang der Umfangsrichtung U gegenüber liegen. Am ersten Endabschnitt 80 sind an einer dem Innenraum I des Gassackes 2 zugewandten Oberseite mehrere Ausströmöffnungen 5b vorgesehen, die vor dem Aktivieren der Kühlvorrichtung z.B. mit einer Folie verschlossen sein können. In dem gegenüberliegenden zweiten Endabschnitt 81 ist ein das Reservoir 5a abdichtender Kolben 20 entlang der Umfangsrichtung U verschieblich gelagert. Zum Abdichten des Reservoirs 5a liegt der Kolben 20 vorzugsweise abdichtend an der Wandung des Reservoirs 5a an. Hierzu kann der Kolben 20 einen elastischen äußeren Randbereich (z.B. aus einem Gummi) aufweisen. Zum Freisetzen des im Reservoirs 5a gespeicherten Kühlmittels K ist der Kolben 20 an einer dem Reservoir 5a abgewandten Seite mit Gas beaufschlagbar, das durch eine Bewegungserzeugungsvorrichtung 5c in Form eines längs erstreckten Gasgenerators bereitgestellt wird, die zum Aktivieren der Kühlvorrichtung 5 entsprechend den Figuren 10, 11 bzw. 15 bis 17 mit einer Steuereinheit S und einer Sensoreinheit S' gekoppelt ist.

Die Bewegungserzeugungsvorrichtung 5c weist eine Längsachse auf, die parallel zu der Erstreckungsebene des Flansches 75 des Diffusors 70 verläuft und mit dem zweiten Endabschnitt 81 des Reservoirs 5a fluchtet. Die Bewegungserzeugungsvorrichtung 5c ist lediglich durch den Kolben 20 vom Reservoir 5a getrennt und weist einen mit der Wandung des Reservoirs 5a verbunden Mantel auf, der ebenfalls mit dem zweiten Endabschnitt 81 des Reservoirs 5a fluchtet. Auf diese Weise bildet die in der Figur 18 gezeigte Kühlvorrichtung 5 eine kompakte Einheit, die als eigenständiges Untermodul an einem umlaufenden Flansch 75 eines Diffusors 70 festlegbar ist.

Figur 19 zeigt den im Gassack 2 der in der Figur 1 bzw. 2 gezeigten Art herrschenden Druck (Gassackinnendruck) in kPa, in Abhängigkeit von der in den Innenraum **I** des Gassackes 2 eingeleiteten Kühlflüssigkeitsmenge (In Gramm), für drei verschiedene Volumina des innenraumes I des Gassackes 2, und zwar für 120 Liter (gepunktete Linie), 60 Liter (durchgezogene Linie) und für 30 Liter (gestrichelte Linie). Wie der Darstellung entnommen werden kann, ist der Zusammenhang zwischen dem Gassackinnendruck und der eingebrachten Kühlflüssigkeit in etwa linear.

## Patentansprüche

1. Airbagmodul für ein Kraftfahrzeug, mit
- einem Gassack, der zum Schutz eines Insassen mit Gas aufblasbar ist,
- einem Gasgenerator zum Erzeugen des zum Aufblasen des Gassackes vorgesehenen Gases, und
- einer zusätzlichen Kühlvorrichtung, die ein öffenbares Reservoir zum Speichern eines Kühlmittels umfasst, wobei das Reservoir dazu ausgebildet ist, geöffnet zu werden, so dass das Kühlmittel zum Kühlen des zum Aufblasen des Gassackes verwendeten Gases in Kontakt mit diesem gelangen kann, und
- einem in einer Umfangsrichtung (U) umlaufenden Flansch (75) zum Festlegen des Gassackes (2) an einem Teil (10) des Airbagmoduls (1),
**dadurch gekennzeichnet,**
**dass** das Reservoir (5a) am Flansch (75) angeordnet ist und sich in der Umfangsrichtung (U) entlang des Flansches (75) erstreckt.

2. Airbagmodul nach Anspruch 1, **gekennzeichnet durch** einen Diffusor (70) zur Lenkung der **durch** den Gasgenerator (3) zum Aufblasen des Gassackes (2) erzeugten Gase.

3. Airbagmodul nach Anspruch 2, **dadurch gekennzeichnet, dass** der Diffusor (70) den Flansch (75) aufweist.

4. Airbagmodul nach einem der vorhergehenden Ansprüche, **dadurch gekennzeichnet, dass** die Kühlvorrichtung (5) eine Bewegungserzeugungsvorrichtung (5c) umfasst, die dazu eingerichtet und vorgesehen ist, das Reservoir (5a) zum Freisetzen des Kühlmittels (K) zu öffnen.

5. Airbagmodul nach Anspruch 4, **dadurch gekennzeichnet, dass** die Bewegungserzeugungsvorrichtung (5c) dazu eingerichtet und vorgesehen ist, zum Freisetzen des Kühlmittels (K) einen Verschluss (V) einer Ausströmöffnung (5b, 5f) des Reservoirs (5a) zu öffnen, durch die hindurch das Kühlmittel (K) freigesetzt werden kann.

6. Airbagmodul nach einem der vorhergehenden Ansprüche, **dadurch gekennzeichnet, dass** die Kühlvorrichtung (5) dazu ausgebildet ist, zum Unter-Druck-Setzen des Kühlmittels (K) das Kühlmittel (K) über eine Membran (30) mit einem Gas zu beaufschlagen.

7. Airbagmodul nach Anspruch 6, **dadurch gekennzeichnet, dass** das Kühlmittel (K) zum Beaufschlagen mit Gas in die Membran (30) eingeschlossen ist.

8. Airbagmodul nach einem der vorhergehenden Ansprüche, **dadurch gekennzeichnet, dass** eine Mehrzahl an Ausströmöffnungen (5b, 5f) zum Freisetzen des Kühlmittels (K) vorgesehen ist.

9. Airbagmodul nach Anspruch 8, **dadurch gekennzeichnet, dass** die Ausströmöffnungen (5b) an einem ersten Endabschnitt (80) des Reservoirs (5a) ausgebildet sind.

10. Airbagmodul nach Anspruch 9, **gekennzeichnet durch** einen dem ersten Endabschnitt (80) gegenüberliegenden zweiten Endabschnitt (81) des Reservoirs (5a), in dem ein Kolben (20) zum Freisetzen des Kühlmittels (K) aus einer ersten in einer zweite Position bewegbar angeordnet ist.

11. Airbagmodul nach einem der vorangegangenen Ansprüche, **gekennzeichnet durch** eine sich entlang des Reservoirs (5a) erstreckende Druckkammer (90), die zum unter Druck setzen des Kühlmittels (K) mit Gas befüllbar ist.

12. Airbagmodul nach Anspruch 6 oder 7 und nach Anspruch 11, **dadurch gekennzeichnet, dass** die Druckkammer (90) und das Reservoir (5a) durch die Membran (30) voneinander getrennt sind.

13. Airbagmodul nach den Ansprüchen 4 und 12, **dadurch gekennzeichnet, dass** die Bewegungserzeugungsvorrichtung (5c) dazu ausgebildet ist, ein die Membran (30) beaufschlagendes Gas in der Druckkammer (90) zu erzeugen.

14. Airbagmodul nach einem der Ansprüche 11 bis 13, **dadurch gekennzeichnet, dass** das Reservoir (5a) und / oder die Druckkammer (90) einstückig mit dem Flansch (75) ausgebildet sind.

15. Airbagmodul nach einem der Ansprüche 2 bis 14, **dadurch gekennzeichnet, dass** die Kühlvorrichtung (5) in den Diffusor (70) integriert ist.

16. Airbagmodul nach einem der Ansprüche 1 bis 13, **dadurch gekennzeichnet, dass** die Kühlvorrichtung (5) ein eigenständiges, am Diffusor (70) befestigbares Untermodul bildet.

17. Airbagmodul nach Anspruch 8 oder einem der Ansprüche 9 bis 16 soweit rückbezogen auf Anspruch 8, **dadurch gekennzeichnet, dass** die Ausströmöffnungen (5b) entlang der Umfangsrichtung (U) gleichmäßig verteilt an einer Oberseite (92b) des Reservoirs (5a) angeordnet sind.

18. Airbagmodul nach einem der vorhergehenden Ansprüche, **dadurch gekennzeichnet, dass** die Temperatur des in dem Gassack (2) befindlichen Gases unabhängig vom Zeitpunkt einer Aktivierung des Gasgenerators (3) mittels der Kühlvorrichtung (5) beeinflussbar ist.

## Claims

1. Airbag module for a motor vehicle, having
- a gas sack that can be inflated with gas to protect an occupant,
- a gas generator for generating the gas provided for inflating the gas sack,
- an additional cooling device comprising an openable reservoir for storing a coolant, with the reservoir being designed to be opened, so that the coolant for cooling the gas in the gas sack can come into contact with said gas,
- a flange (75) circulating in a peripheral direction (U) for fixing the gas sack (2) to a part (10) of the airbag module (1), **characterized in that**
the reservoir (5a) is arranged on the flange (75) and extends in the peripheral direction (U) along the flange (75).

2. Airbag module according to claim 1, **characterized by** a diffuser (70) for deflecting the gases that are generated by the gas generator (3) for inflating the gas sack (2).

3. Airbag module according to claim 2, **characterized in that** the diffusor (70) comprises said flange (75).

4. Airbag module according to one of the preceding claims, **characterized in that** the cooling device (5) comprises a movement generating device (5c) that is adapted and provided to open the reservoir (5a) for releasing the coolant (K).

5. Airbag module according to claim 4, **characterized in that** the movement generating device (5c) is adapted and provided to open a closure (V) of an outflow opening (5b, 5f) of the reservoir (5a) for releasing the coolant (K), through which outflow opening (5b, 5f) the coolant (K) can be released.

6. Airbag module according to one of the preceding claims, **characterized in that** the cooling device (5) is designed to act on the coolant (K) with a gas via a diaphragm (30) in order to pressurize the coolant (K).

7. Airbag module according to claim 6, **characterized in that** the coolant (K) is enclosed by the diaphragm (30) for pressurizing the coolant (K).

8. Airbag module according to one of the preceding claims, **characterized in that** a plurality of outflow openings (5b, 5f) for releasing the coolant (K) are provided.

9. Airbag module according to claim 8, **characterized in that** the outflow openings (5b) are formed on a first end section (80) of the reservoir (5a).

10. Airbag module according to claim 9, **characterized by** a second end section (81) of the reservoir (5a) situated opposite the first end section (80), in which second end section (81) a piston (20) is arranged such that it can be moved from a first into a second position to release the coolant (K).

11. Airbag module according to one of the preceding claims, **characterized by** a pressure chamber (90) extending along the reservoir (5a) that can be filled with gas to pressurize the coolant (K).

12. Airbag module according to claim 6 or 7 and according to claim 11, **characterized in that** the pressure chamber (90) and the reservoir (5a) are separated from one another by the diaphragm (30).

13. Airbag module according to claims 4 and 12, **characterized in that** the movement generating device (5c) is designed to generate in the pressure chamber (90) a gas acting on the diaphragm (30).

14. Airbag module according to one of the claims 11 to 13, **characterized in that** the reservoir (5a) and/or the pressure chamber (90) is formed in one piece with the flange (75).

15. Airbag module according to one of the claims 2 to 14, **characterizted in that** the cooling device (5) is integrated into the diffuser (70).

16. Airbag module according to one of the claims 1 to 13, **characterized in that** the cooling device (5) forms a discrete sub-module that can be fastened to the diffuser (70).

17. Airbag module according to claim 8 or one of the claims 9 to 16 when referred back to claim 8, **characterized in that** the outflow openings (5b) are distributed uniformly along the peripheral direction (U) on an upper side (92b) of the reservoir (5a).

18. Airbag module according to one of the preceding claims, **characterized in that** the temperature of the gas in the gas sack (2) can be influenced by the cooling device (5) irrespective of the time of activation of the gas generator (3).

## Revendications

1. Module d'airbag pour un véhicule automobile, avec
- un sac de gaz gonflable avec du gaz pour protéger un occupant,
- un générateur de gaz servant à générer le gaz prévu pour gonfler le sac de gaz, et
- un dispositif de refroidissement supplémentaire comprenant un réservoir pouvant être ouvert, servant au stockage d'un agent réfrigérant, le réservoir étant conçu pour être ouvert de manière à ce que l'agent réfrigérant puisse entrer en contact avec le gaz utilisé pour gonfler le sac de gaz afin de le refroidir, et
- une bride (75) circulant dans une direction périphérique en vue de fixer le sac de gaz (2) sur une partie (10) du module d'airbag (1),
**caractérisé en ce que**
le réservoir (5a) est disposé sur la bride (75) et s'étend dans la direction périphérique (U) le long de la bride (75).

2. Module d'airbag selon la revendication 1, **caractérisé par** un diffuseur (70) servant à diriger les gaz générés par le générateur de gaz (3) pour gonfler le sac de gaz (2).

3. Module d'airbag selon la revendication 2, **caractérisé en ce que** le diffuseur (70) présente la bride (75).

4. Module d'airbag selon l'une quelconque des revendications précédentes, **caractérisé en ce que** le dispositif de refroidissement (5) comprend un dispositif (5c) de production de mouvement qui est aménagé et conçu pour ouvrir le réservoir (5a) afin de libérer l'agent réfrigérant (K).

5. Module d'airbag selon la revendication 4, **caractérisé en ce que** le dispositif (5c) de production de mouvement est aménagé et conçu pour ouvrir un dispositif de fermeture (V) d'un orifice d'écoulement (5b, 5f) du réservoir (5a) en vue de libérer l'agent réfrigérant (K), orifice à travers lequel l'agent réfrigérant (K) peut être libéré.

6. Module d'airbag selon l'une quelconque des revendications précédentes, **caractérisé en ce que** le dispositif de refroidissement (5) est conçu pour solliciter l'agent réfrigérant (K) avec un gaz par l'intermédiaire d'une membrane (30) afin de mettre l'agent réfrigérant (K) sous pression.

7. Module d'airbag selon la revendication 6, **caractérisé en ce que** l'agent réfrigérant (K) est inclus dans la membrane (30) pour la sollicitation avec le gaz.

8. Module d'airbag selon l'une quelconque des revendications précédentes, **caractérisé en ce qu'**il est prévu une pluralité d'orifices d'écoulement (5b, 5f) pour libérer l'agent réfrigérant (K).

9. Module d'airbag selon la revendication 8, **caractérisé en ce que** les orifices d'écoulement (5b) sont formés sur une première section d'extrémité (80) du réservoir (5a).

10. Module d'airbag selon la revendication 9, **caractérisé par** une seconde section d'extrémité (81) faisant face à la première section d'extrémité (80) du réservoir (5a), dans lequel un piston (20) est disposé de manière à se déplacer depuis une première position dans une seconde position en vue de libérer l'agent réfrigérant (K).

11. Module d'airbag selon l'une quelconque des revendications précédentes, **caractérisé par** une chambre de pression (90) s'étendant le long du réservoir (5a), laquelle peut être remplie de gaz pour mettre l'agent réfrigérant (K) sous pression.

12. Module d'airbag selon la revendication 6 ou 7 et selon la revendication 11 **caractérisé en ce que** la chambre de pression (90) et le réservoir (5a) sont séparés l'un de l'autre par la membrane (30).

13. Module d'airbag selon les revendications 4 et 12, **caractérisé en ce que** le dispositif (5c) de production de mouvement est conçu pour générer, dans la chambre de pression (90), un gaz sollicitant la membrane (30).

14. Module d'airbag selon l'une quelconque des revendications 11 à 13, **caractérisé en ce que** le réservoir (5a) et/ou la chambre de pression (90) sont conçus d'une seule pièce avec la bride (75).

15. Module d'airbag selon l'une quelconque des revendications 2 à 14, **caractérisé en ce que** le dispositif de refroidissement (5) est intégré dans le diffuseur (70).

16. Module d'airbag selon l'une quelconque des revendications 1 à 13, **caractérisé en ce que** le dispositif de refroidissement (5) forme un sous-module indépendant, pouvant être fixé sur le diffuseur (70).

17. Module d'airbag selon la revendication 8 ou l'une quelconque des revendications 9 à 16, pour autant qu'elles se rattachent à la revendication 8, **caractérisé en ce que** les orifices d'écoulement (5b) sont disposés sur un côté supérieur (92b) du réservoir (5a), répartis régulièrement le long de la direction périphérique (U).

18. Module d'airbag selon l'une quelconque des revendications précédentes, **caractérisé en ce que** la température du gaz se trouvant dans le sac de gaz (2) peut être influencée indépendamment du moment d'une activation du générateur de gaz (3) à l'aide du dispositif de refroidissement (5).
